(19) Europäisches Patentamt
European Patent Office
Office européen des brevets

(11) **EP 3 611 303 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(51) Int Cl.:
***E01C 19/00*** *(2006.01)*

(21) Anmeldenummer: **19190829.2**

(22) Anmeldetag: **08.08.2019**

(54) **SELBSTFAHRENDE BAUMASCHINE UND VERFAHREN ZUM STEUERN EINER SELBSTFAHRENDEN BAUMASCHINE**

SELF-PROPELLED CONSTRUCTION MACHINE AND METHOD FOR CONTROLLING THE SAME

ENGIN DE CONSTRUCTION AUTONOME ET PROCÉDÉ DE COMMANDE D'UN ENGIN DE CONSTRUCTION AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2018 DE 102018119962**

(43) Veröffentlichungstag der Anmeldung:
**19.02.2020 Patentblatt 2020/08**

(73) Patentinhaber: **Wirtgen GmbH**
**53578 Windhagen (DE)**

(72) Erfinder:
• **FRITZ, Matthias**
**53773 Hennef (DE)**
• **Wagner, Dr., Stefan**
**53604 Bad Honnef (DE)**
• **BARIMANI, Cyrus**
**53639 Königswinter (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
**DE-A1- 19 640 282    DE-A1-102011 106 139**
**JP-B1- 5 555 367    US-A1- 2013 041 549**

**Beschreibung**

Die Erfindung betrifft eine selbstfahrende Baumaschine mit einem von lenkbaren und/oder antreibbaren Laufwerken getragenen Maschinenrahmen und ein Verfahren zum Steuern einer selbstfahrenden Baumaschine.

Selbstfahrende Baumaschinen zeichnen sich dadurch aus, dass sie über eine an einem Maschinenrahmen angeordnete Arbeitseinrichtung zur Errichtung von Baukörpern auf einem Gelände oder zum Verändern des Geländes verfügen. Zu den bekannten selbstfahrenden Baumaschinen gehören beispielsweise Gleitschalungsfertiger, Straßenfräsmaschinen, Recycler oder Surface-Miner.

Bei den Straßenfräsmaschinen, Recyclern und Surface-Minern umfasst die Arbeitseinrichtung eine mit Fräs- oder Schneidwerkzeugen bestückte Fräswalze, einen Fräs-/Mischrotor oder eine Schneidwalze, mit der vom Gelände Material abgetragen werden kann. Bei der Arbeitseinrichtung von Gleitschalungsfertigern handelt es sich um eine Gleitschalung, die auch als Betonmulde bezeichnet wird. Mit der Betonmulde können Baukörper unterschiedlicher Ausbildung, beispielsweise Betonschutzwände, Kanäle, Wasserrinnen oder Bordsteine hergestellt werden.

Die selbstfahrenden Baumaschinen verfügen weiterhin über eine Antriebseinrichtung zum Ausführen von translatorischen und/oder rotatorischen Bewegungen der Baumaschine in dem Gelände sowie eine Steuerungseinrichtung zur Ansteuerung der Antriebseinrichtung.

Zur Errichtung von Baukörpern auf dem Gelände oder zum Verändern des Geländes wird bei selbstfahrenden Baumaschinen eine weitgehend automatische Steuerung der Baumaschine ohne nennenswerte Eingriffe des Fahrzeugführers angestrebt. Bei der automatischen Steuerung der Baumaschine wird die Antriebseinrichtung der Baumaschine derart gesteuert, dass sich ein Referenzpunkt auf der Baumaschine entlang einer vorgegebenen Trajektorie (Soll-Wegstrecke), d. h. auf der Trajektorie oder in einem vorgegebenen Abstand zur Trajektorie bewegt, um einen Baukörper zu errichten oder das Gelände zu verändern.

Ein bekanntes Verfahren zum Steuern von selbstfahrenden Baumaschinen setzt den Einsatz eines Leitdrahtes voraus, mit dem die Trajektorie oder eine Äquidistante zu der Trajektorie vorgegeben wird.

Selbstfahrende Baumaschinen können auch unter dem Einsatz einer Totalstation zur Positionsbestimmung oder eines globalen Navigationssatellitensystems (GNSS) gesteuert werden. Für die automatische Steuerung der Baumaschine werden die Trajektorie in dem Gelände beschreibende Daten ermittelt. Diese Daten können Koordinaten in einem von der Baumaschine unabhängigen zwei- oder dreidimensionalen Koordinatensystem sein.

Die Steuerung der Baumaschine mit einem globalen Navigationssatellitensystem (GNSS) hat sich in der Praxis bewährt. Allerdings setzt diese Steuerung der Baumaschine den Empfang der Satellitensignale des GNSS voraus. In der Praxis kann der Empfang der Satellitensignale gestört sein. Beispielsweise kann bei der Fahrt der Baumaschine hinter Gebäudeabdeckungen, unter einer Brücke hindurch oder in einen Tunnel hinein der Empfang des GNSS-Signals gestört sein, was zur Folge hat, dass mit dem GNSS die Position der Baumaschine nicht mehr bestimmt werden kann. Dann ist die Steuerung der Baumaschine mit dem GNSS nicht mehr möglich.

Die US 2013/0041549 A1 beschreibt eine Steuervorrichtung für ein Fahrzeug, die über eine Positionsbestimmungs-Einrichtung zur Bestimmung der Position eines auf das Fahrzeug bezogenen Referenzpunktes (R) und der Orientierung ($\psi$) des Fahrzeugs in einem von dem Fahrzeug unabhängigen Koordinatensystem (X, Y, Z) verfügt. Dabei geht die US 2013/0041549 A1 von dem Problem aus, dass konventionelle Steuervorrichtungen zwar die Abweichung einer vorgegebenen Position bzw. eines vorgegebenen Weges (Trajektorie) von einer gewünschten Position bzw. eines gewünschten Weges bestimmen, aber keine Informationen über die tatsächliche Position des Fahrzeugs liefern.

Die US 2013/0041549 A1 beschreibt die Kombination eines Navigationssatellitensystems und eines optischen Navigationssystems, das im Gegensatz zu einem GNSS referenzlos betrieben werden kann. Die US 2013/0041549 A1 offenbart auch verschiedene Ausführungsbeispiele, bei denen das optische Navigationssystem in Verbindung mit einem GNSS-System oder anderen inertialen Navigationssystemen betrieben wird. In diesem Zusammenhang offenbart die US 2013/0041549 A1 inertiale Navigationssysteme die Lenkwinkelsensoren umfassen. Die US 2013/0041549 A1 schlägt vor, die Steuerung der Baumaschine mit einem GNSS-System oder einem inertialen Navigationssystem, das absolute Positionswerte bestimmt, und einem relative Positionswerte bestimmenden optischen Navigationssystem vorzunehmen, wobei die optischen Sensoren die Steuerung übernehmen können, wenn das GNSS ausfällt.

Der Erfindung liegt die Aufgabe zugrunde, eine selbstfahrende Baumaschine zu schaffen, die sich entlang einer Trajektorie mit großer Genauigkeit auch dann bewegen lässt, wenn der Empfang der Satellitensignale des globalen Navigationssatellitensystems (GNSS) gestört sein sollte. Eine weitere Aufgabe der Erfindung ist, ein Verfahren anzugeben, mit dem sich eine selbstfahrende Baumaschine entlang einer Trajektorie mit großer Genauigkeit auch dann bewegen lässt, wenn der Empfang der Satellitensignale des GNSS gestört sein sollte. Der Erfindung liegt insbesondere die Aufgabe zugrunde, die Steuerung einer Baumaschine auch bei einer Störung des Empfangs der Satellitensignale des GNSS sicherzustellen, so dass die Baumaschine nicht angehalten werden muss.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße selbstfahrende Baumaschine verfügt über einen von Laufwerken getragenen Maschinenrahmen. Von den Laufwerken sind wenigstens einige, vorzugsweise sämtliche Laufwerke, antreibbare und/oder lenkbare Laufwerke. Die Laufwerke können Kettenlaufwerke oder Räder sein. Die Baumaschine kann beispielsweise eine Straßenfräse sein, die eine mit Fräs- oder Schneidwerkzeugen bestückte Fräs-/Schneidwalze aufweist, oder die Baumaschine kann ein Gleitschalungsfertiger sein, der eine Vorrichtung zum Formen von fließfähigem Material aufweist, oder die Baumaschine kann ein Straßenfertiger sein, der eine Einbaubohle zum Formen von Material aufweist. Die Baumaschine kann auch Einrichtungen zur Höhenverstellung des Maschinenrahmens bzw. der Arbeitseinrichtung in Bezug auf die Geländeoberfläche aufweisen, beispielsweise Hubsäulen, an denen die Laufwerke befestigt sind.

Die erfindungsgemäße Baumaschine verfügt weiterhin über eine Positionsbestimmungs-Einrichtung zur Bestimmung der Position eines Referenzpunktes auf der Baumaschine in einem von der Baumaschine unabhängigen Koordinatensystem und der Orientierung der Baumaschine in einem von der Baumaschine unabhängigen Koordinatensystem. Die Positionsbestimmungs-Einrichtung weist mindestens einen Navigationssatellitensystem-Empfänger zum Empfangen von Satellitensignalen eines globalen Navigationssatellitensystems (GNSS) und eine Recheneinheit auf, die derart konfiguriert ist, dass auf der Grundlage der Satellitensignale die Position eines Referenzpunktes (R) auf der Baumaschine beschreibende Daten und die Orientierung der Baumaschine beschreibende Daten in einem von der Baumaschine unabhängigen Koordinatensystem (X, Y, Z) bestimmt werden können.

Die Positionsbestimmungs-Einrichtung kann Bestandteil einer zentralen Steuerungseinrichtung der Baumaschine sein, auf der ein Steuerungsprogramm (Software) läuft, um die einzelnen Bauteile oder Baugruppen der Baumaschine anzusteuern. Beispielsweise kann die Positionsbestimmungs-Einrichtung eine speicherprogrammierbare Steuerung (SPS) enthalten, die einen Mikrocontroller umfassen kann.

Darüber hinaus verfügt die Baumaschine über eine mit der Positionsbestimmungs-Einrichtung zusammenwirkende Steuerungseinrichtung, die derart konfiguriert ist, dass die Lenkwinkel der lenkbaren Laufwerke derart eingestellt werden, dass sich der Referenzpunkt (R) der Baumaschine entlang einer vorgegebenen Trajektorie (T) bewegt, die beispielsweise durch kartesische Koordinaten in einem kartesischen Koordinatensystem oder Polarkoordinaten in einem Polarkoordinatensystem oder Richtungsangaben und eine Kilometrierung beschrieben werden kann. Die Trajektorie kann eine Wegstrecke im Raum oder in einer Ebene sein. Wenn die Trajektorie eine dreidimensionale Bahnkurve ist, können auch Höhenänderungen Berücksichtigung finden, beispielsweise die Einstellung der Höhe der Arbeitseinrichtung in Bezug auf die Geländeoberfläche.

Die Steuerungseinrichtung kann ebenfalls Bestandteil einer zentralen Steuerungseinrichtung der Baumaschine sein, auf der ein Steuerungsprogramm (Software) läuft, um die einzelnen Bauteile oder Baugruppen der Baumaschine anzusteuern. Beispielsweise kann die Steuerungseinrichtung eine speicherprogrammierbare Steuerung (SPS) enthalten, die einen Mikrocontroller umfassen kann. Steuerungs- und der Positionsbestimmungs-Einrichtung können eine gemeinsame zentrale Steuer- und Recheneinheit sein.

Die Steuerung der Baumaschine erfolgt im Normalbetrieb unter Verwendung eines globalen Navigationssatellitensystems (GNSS), so dass sich der Referenzpunkt (R) auf der Baumaschine entlang einer vorgegebenen Trajektorie mit hoher Genauigkeit bewegt. Die Steuerung der Baumaschine mit dem GNSS kann sowohl eine Steuerung in der Ebene als auch eine Höhensteuerung umfassen. Die Höhensteuerung kann aber auch unter Verwendung eines terrestrischen Systems (Totalstation) erfolgen. Die Steuerung der Baumaschine mit dem GNSS kann auch die Auswertung von Korrektursignalen einschließen, die von einer Basisstation empfangen werden (Differential-GNSS). Derartige Steuerungen gehören zum Stand der Technik.

Die Baumaschine sieht einen besonderen Steuerungsmodus vor, in dem die Steuerung der Baumaschine nicht auf der Grundlage der Satellitensignale des globalen Navigationssatellitensystems (GNSS) erfolgt. Solange der Navigationssatellitensystem-Empfänger die Satellitensignale mit ausreichender Qualität empfängt, kann die Steuerung der Baumaschine allein unter Verwendung des GNSS erfolgen. Für den Fall, dass der Satellitensignal-Empfänger die Satellitensignale nicht mehr mit ausreichender Qualität empfängt, kann die Steuerung der Baumaschine in dem besonderen Steuerungsmodus erfolgen.

Die Recheneinheit der Positionsbestimmungs-Einrichtung der erfindungsgemäßen Baumaschine ist derart konfiguriert, dass in einem Steuerungsmodus, in dem die Steuerung der Baumaschine nicht auf der Grundlage der Satellitensignale des globalen Navigationssatellitensystems erfolgt, während der Bewegung der Baumaschine die Position $(x_n, y_n, z_n)$ des auf die Baumaschine bezogenen Referenzpunktes (R) und die Orientierung ($\psi$) der Baumaschine in dem von der Baumaschine unabhängigen Koordinatensystem (X, Y, Z) auf der Grundlage eines in der Recheneinheit der Positionsbestimmungs-Einrichtung implementierten kinematischen Modells bestimmt wird, das die Position (P) des Referenzpunktes (R) und die Orientierung ($\psi$) in dem von der Baumaschine unabhängigen Koordinatensystem (X, Y, Z) beschreibt. Auf der Grundlage des kinematischen Modells wird die Position (P) des Referenzpunktes (R) und die Orientierung ($\psi$) der Baumaschine in Abhängigkeit von den Lenkwinkeln und den Geschwindigkeiten der Laufwerke berechnet.

Die Positionsbestimmungs-Einrichtung verfügt über den lenkbaren Laufwerken zugeordnete Lenkwinkel-Sensoren zur Bestimmung der Lenkwinkel und den antreibbaren Laufwerken zugeordnete Geschwindigkeits-Sensoren zur Bestimmung der Geschwindigkeiten der Laufwerke, wobei Datenübertragungsmittel zur Übertragung der die Lenkwinkel und die Geschwindigkeiten beschreibenden Daten von den Lenkwinkel-Sensoren und den Geschwindigkeits-Sensoren zu der Recheneinheit als Eingangsgrößen des kinematischen Modells vorgesehen sind.

Die auf der Grundlage der Satellitensignale des globalen Navigationssatellitensystems bestimmte aktuelle Position des Referenzpunktes (R) und die aktuelle Orientierung ($\psi$) der Baumaschine in dem von der Baumaschine unabhängigen Koordinatensystem (X, Y, Z) können fortlaufend in einen Speicher eingelesen werden. Wenn die Steuerung auf der Grundlage des kinematischen Modells erfolgen soll, können die zuletzt in den Speicher eingelesene Position (P) des Referenzpunktes (R) und die Orientierung ($\psi$) der Baumaschine in dem Steuerungsmodus auf der Grundlage des kinematischen Modells als die aktuelle Position (P) des Referenzpunktes (R) und die aktuelle Orientierung ($\psi$) der Baumaschine aus dem Speicher ausgelesen werden. Aus der aktuellen Position und Orientierung können dann die neue Position und Orientierung auf der Grundlage des kinematischen Modells bestimmt werden.

Eine bevorzugte Ausführungsform der Baumaschine sieht vor, dass die Recheneinheit der Positionsbestimmungs-Einrichtung derart konfiguriert ist, dass in dem Steuerungsmodus auf der Grundlage des kinematischen Modells die Position (P) des Referenzpunktes (R) und die Orientierung ($\psi$) der Baumaschine in vorgegebenen Zeitintervallen fortlaufend bestimmt wird. Folglich werden in einem iterativen Prozess die nach Ablauf eines Zeitintervalls bzw. nach Zurücklegen einer Wegstrecke einer bestimmten Länge auf der Grundlage des kinematischen Modells bestimmte neue Position und Orientierung als Eingangsgrößen für das kinematische Modell herangezogen, um für das nachfolgende Zeitintervall bzw. die nachfolgende Wegstrecke wieder eine neue Position und Orientierung bestimmen zu können.

Eine besonders bevorzugte Ausführungsform der Baumaschine sieht vor, dass die Recheneinheit der Positionsbestimmungs-Einrichtung derart konfiguriert ist, dass die Modellierung der Bewegung der Baumaschine auf der Grundlage eines Lagrange-Ansatzes erfolgt. Es können aber auch andere bekannte mathematische Verfahren und Funktionen verwendet werden, um die unterschiedlichsten Nebenbedingungen berücksichtigen zu können. Die Steuerungseinrichtung der erfindungsgemäßen Baumaschine kann unterschiedlich ausgebildet sein. Bei einer Ausführungsform ist die Steuerungseinrichtung derart konfiguriert, dass die Antriebseinrichtung derart angesteuert wird, dass der Abstand zwischen der von der Trajektorie beschriebenen Soll-Position und der Ist-Position des Referenzpunktes auf der Baumaschine minimal ist. Der Steuerung kann auch eine von der Trajektorie beschriebene Richtungsdifferenz zwischen einer Soll-Richtung und der Ist-Richtung der Baumaschine zugrunde liegen.

Ein besonderer Aspekt der Erfindung liegt in der Kompensation der Faktoren, die einen Einfluss auf das Lenkverhalten einer Baumaschine ausüben. Diese Faktoren werden nachfolgend unter dem Begriff "Schlupf" zusammengefasst. Bevorzugte Ausführungsformen sehen bei der Steuerung der Baumaschine auf der Grundlage des kinematischen Modells auch die Berücksichtigung des Schlupfes vor.

Bei der erfindungsgemäßen Baumaschine ist die Recheneinheit der Positionsbestimmungs-Einrichtung derart konfiguriert, dass in dem Steuerungsmodus, in dem die Steuerung der Baumaschine auf der Grundlage der Satellitensignale des globalen Navigationssatellitensystems erfolgt, mindestens eine Korrekturgröße für das kinematische Modell auf der Grundlage mindestens eines in einem bestimmten Streckenabschnitt von der Steuerungseinrichtung für ein Laufwerk vorgegebenen Lenkwinkels ermittelt wird. Die Recheneinheit der Positionsbestimmungs-Einrichtung ist dann derart konfiguriert, dass in dem Steuerungsmodus, in dem die Steuerung der Baumaschine nicht auf der Grundlage der Satellitensignale des globalen Navigationssatellitensystems erfolgt, die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung der mindestens einen Korrekturgröße bestimmt wird.

Die mindestens eine Korrekturgröße für den Lenkwinkel wird für das jeweilige Bauvorhaben während der Fahrt in dem Gelände in Abhängigkeit von den vorliegenden Gegebenheiten unter realen Bedingungen ermittelt.

Die bekannten Baumaschinen zeichnen sich durch eine am Maschinenrahmen vorgesehene Arbeitseinrichtung aus. Bei einer Straßenfräse ist die Arbeitseinrichtung eine mit Fräs- oder Schneidwerkzeugen bestückte Fräs-/Schneidwalze, bei einem Gleitschalungsfertiger ist die Arbeitseinrichtung eine Vorrichtung zum Formen von fließfähigem Material und bei einem Straßenfertiger ist die Arbeitseinrichtung eine Einbaubohle zum Formen von Material.

Die Korrekturgröße kann bei einer Baumaschine in Abhängigkeit von der Art der Arbeitseinrichtung und/oder der Anordnung der Arbeitseinrichtung in Arbeitsrichtung auf der linken oder rechten Seite der Längsachse der Baumaschine und/oder dem Abstand der Arbeitseinrichtung zu der Längsachse des Maschinenrahmens (Ausladung/outreach) und/oder der Beschaffenheit des Untergrundes und/oder dem Verlauf des zu bearbeitenden Streckenabschnitts und/oder der vorgegebenen Vorschubgeschwindigkeit der Baumaschine bzw. der Geschwindigkeit eines Laufwerks ermittelt werden. Die Steuerung kann die Korrektur des Lenkwinkels nur eines, einzelner oder sämtlicher lenkbarer Laufwerke vorsehen. Vorzugsweise werden die Lenkwinkel sämtlicher Laufwerke korrigiert.

Bei einem Gleitschalungsfertiger beispielsweise kann die Korrekturgröße in Abhängigkeit von der Anordnung der Vorrichtung zum Formen von fließfähigem Material in Arbeitsrichtung auf der linken oder rechten Seite der Längsachse des Maschinenrahmens des Gleitschalungsfertigers und/oder dem Abstand der Vorrichtung zum Formen von fließfähigem Material zu der Längsachse des Maschinenrahmens (Ausladung/outreach) ermittelt werden.

Der Streckenabschnitt für die Ermittlung der mindestens einen Korrekturgröße kann grundsätzlich ein beliebiger Streckenabschnitt, beispielsweise ein gerader Streckenabschnitt oder ein gekrümmter Streckenabschnitt sein. Wenn der Ausfall der Satellitensignale nur einen relativ kurzen Zeitraum betrifft, in dem die Baumaschine eine nur relativ kleine Strecke zurücklegt, beispielsweise nur 10 bis 20 m, kann davon ausgegangen werden, dass sich die Gegebenheiten auf dieser Strecke nur unwesentlich ändern. Beispielsweise ändert sich die Steigung oder die Richtung einer Fahrbahn naturgemäß auf einer so kurzen Strecke so gut wie gar nicht. Ein aktuell auf einem Streckenabschnitt ermittelter Korrekturwert kann also für einen sich unmittelbar anschließenden Streckenabschnitt als repräsentativ angesehen werden.

In der Praxis ist es ausreichend, wenn die mindestens eine Korrekturgröße in einem geraden Streckenabschnitt ermittelt wird. Dabei wird davon ausgegangen, dass ein Bauvorhaben in der Regel einen geraden Streckenabschnitt umfasst, so dass die Korrekturgröße in diesem Streckenabschnitt ermittelt werden kann. In diesem Fall ist die Korrekturgröße für ein Laufwerk der in dem geraden Abschnitt von der Steuerungseinrichtung für das Laufwerk vorgegebene Lenkwinkel. Die Korrekturgröße kann dann besonders einfach ermittelt werden, da sie von der Steuerungseinrichtung der Baumaschine quasi zur Verfügung gestellt wird.

Eine weitere Ausführungsform sieht die Ermittlung einer Mehrzahl von Korrekturgrößen für unterschiedliche Gegebenheiten oder Bedingungen vor. Folglich können unterschiedliche Korrekturgrößen ermittelt werden, wobei jede Korrekturgröße einer bestimmten Gegebenheit oder Bedingung zugeordnet wird. Diese Korrekturgröße kann dann bei denselben oder vergleichbaren Gegebenheiten oder Bedingungen verwendet werden. Die Recheneinheit der Positionsbestimmungs-Einrichtung ist bei dieser Ausführungsform derart konfiguriert, dass in dem Steuerungsmodus, in dem die Steuerung der Baumaschine auf der Grundlage der Satellitensignale des globalen Navigationssatellitensystems erfolgt, eine Mehrzahl von Korrekturgrößen für das kinematische Modell in Abhängigkeit von dem Verlauf des Streckenabschnitts, d. h. ob der Streckenabschnitt eine Gerade oder eine gekrümmte Strecke mit einer bestimmten Krümmung ist, d. h. in Abhängigkeit von dem eingestellten Lenkwinkel, und/oder in Abhängigkeit von der Geschwindigkeit des Laufwerks ermittelt werden. Da sich diese Bedingungen auf der Baustelle ändern können, wird die betreffende Korrekturgröße vorzugsweise während des Bauvorhabens ermittelt, so dass sie jederzeit zur Verfügung steht.

Bei einem Gleitschalungsfertiger kann für eine Anordnung der Vorrichtung zum Formen von fließfähigem Material in Arbeitsrichtung auf der linken Seite der Längsachse des Gleitschalungsfertigers eine Korrekturgröße und eine Korrekturgröße für eine Anordnung der Vorrichtung zum Formen von fließfähigem Material in Arbeitsrichtung auf der rechten Seite der Längsachse des Gleitschalungsfertigers ermittelt werden. Die Korrekturgrößen können auch in Abhängigkeit von dem Abstand der Vorrichtung zum Formen von fließfähigem Material von der Längsachse des Maschinenrahmens (Ausladung/outreach) ermittelt werden.

Wenn die Baumaschine eine Straßenfräse ist, die eine mit Fräs- oder Schneidwerkzeugen bestückte Fräs-/Schneidwalze aufweist, können Korrekturgrößen für unterschiedliche Anordnungen oder Abstände der Fräs-/Schneidwalze (Ausladung) ermittelt werden. Bei einem Straßenfertiger können Korrekturgrößen für unterschiedliche Anordnungen oder Abstände der Einbaubohle (Ausladung) zum Formen von Material ermittelt werden.

Die Korrekturgrößen für unterschiedliche Anordnungen oder Ausladungen der Arbeitseinrichtung einer Baumaschine sind Korrekturgrößen, die sich während des Bauvorhabens im Allgemeinen nicht ändern, da für ein Bauvorhaben Anordnung und Ausladung der Arbeitseinrichtung vorgegeben werden. Daher können diese Korrekturgrößen auch zuvor auf einem Testgelände empirisch ermittelt und in einem Speicher gespeichert werden.

Die obigen Korrekturgrößen können in einem Speicher gespeichert werden. Die Recheneinheit der Positionsbestimmungs-Einrichtung ist dann derart konfiguriert, dass in dem Steuerungsmodus, in dem die Steuerung der Baumaschine nicht auf der Grundlage der Satellitensignale des globalen Navigationssatellitensystems erfolgt, die Position $(x_n, y_n, z_n)$ des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung mindestens einer der Mehrzahl von Korrekturgrößen bestimmt wird. Folglich kann die Korrektur mit einer Korrekturgröße erfolgen, die für die jeweiligen Gegebenheiten oder Bedingungen des Bauvorhabens repräsentativ ist.

Die oben beschriebenen Ausführungsformen gehen davon aus, dass nur eine Korrektur der Lenkwinkel erforderlich ist. Eine weitere besonders bevorzugte Ausführungsform sieht auch die Ermittlung einer Korrekturgröße für das kinematische Modell für eine Korrektur der mit den Geschwindigkeits-Sensoren gemessenen Geschwindigkeiten der Laufwerke vor. Bei dieser Ausführungsform ist die Recheneinheit der Positionsbestimmungs-Einrichtung derart konfiguriert, dass in dem Steuerungsmodus, in dem die Steuerung der Baumaschine auf der Grundlage der Satellitensignale des globalen Navigationssatellitensystems erfolgt, mindestens eine Korrekturgröße für das kinematische Modell auf der Grundlage der Differenz zwischen einer von der Steuerungseinrichtung für ein Laufwerk vorgegebenen Geschwindigkeit und der gemessenen Geschwindigkeit des Laufwerks ermittelt wird. Die Recheneinheit der Positionsbestimmungs-Einrichtung ist dann derart konfiguriert, dass in dem Steuerungsmodus, in dem die Steuerung der Baumaschine nicht auf der Grundlage der Satellitensignale des globalen Navigationssatellitensystems erfolgt, die Position $(x_n, y_n, z_n)$ des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung der mindestens einen Korrekturgröße für die Geschwindigkeit des mindestens einen Laufwerks bestimmt wird.

Eine Ausführungsform des erfindungsgemäßen Verfahrens sieht vor, dass in dem Steuerungsmodus, in dem die Steuerung der Baumaschine auf der Grundlage der Satellitensignale des globalen Navigationssatellitensystems erfolgt, mindestens eine Korrekturgröße für das kinematische Modell auf der Grundlage mindestens eines in einem bestimmten Streckenabschnitt von der Steuerungseinrichtung für ein Laufwerk vorgegebenen Lenkwinkels ermittelt wird, wobei in dem Steuerungsmodus, in dem die Steuerung der Baumaschine nicht auf der Grundlage der Satellitensignale des globalen Navigationssatellitensystems erfolgt, die Position $(x_n, y_n, z_n)$ des auf die Baumaschine bezogenen Referenzpunktes (R) und die Orientierung $(\psi)$ der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung der mindestens einen Korrekturgröße bestimmt wird.

Eine weitere bevorzugte Ausführungsform des erfindungsgemäßen Verfahrens sieht vor, dass der bestimmte Streckenabschnitt ein gerader Abschnitt (S1) ist, wobei die Korrekturgröße für ein Laufwerk ein in dem geraden Abschnitt von der Steuerungseinrichtung für das Laufwerk vorgegebener Lenkwinkel ist.

Eine weitere bevorzugte Ausführungsform des erfindungsgemäßen Verfahrens sieht vor, dass in dem Steuerungsmodus, in dem die Steuerung der Baumaschine auf der Grundlage der Satellitensignale des globalen Navigationssatellitensystems erfolgt, auf der Grundlage eines in einem bestimmten Streckenabschnitt (S1, S2) von der Steuerungseinrichtung für ein Laufwerk vorgegebenen Lenkwinkels eine Mehrzahl von Korrekturgrößen für das kinematische Modell in Abhängigkeit von der Art der Arbeitseinrichtung der Baumaschine und/oder der Anordnung der Arbeitseinrichtung in Arbeitsrichtung auf der linken oder rechten Seite der Längsachse Maschinenrahmens und/oder dem Abstand der Arbeitseinrichtung zu der Längsachse des Maschinenrahmens und/oder der Beschaffenheit des Untergrundes und/oder dem Verlauf des Streckenabschnitts (S1, S2) und/oder der Geschwindigkeit des Laufwerks ermittelt werden, wobei in dem Steuerungsmodus, in dem die Steuerung der Baumaschine nicht auf der Grundlage der Satellitensignale des globalen Navigationssatellitensystems erfolgt, die Position $(x_n, y_n, z_n)$ des auf die Baumaschine bezogenen Referenzpunktes (R) und die Orientierung $(\psi)$ der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung mindestens einer der Mehrzahl von Korrekturgrößen bestimmt wird.

Eine weitere bevorzugte Ausführungsform des erfindungsgemäßen Verfahrens sieht vor, dass bei einer Baumaschine, die ein Gleitschalungsfertiger ist, der eine Vorrichtung zum Formen von fließfähigem Material aufweist, in dem Steuerungsmodus, in dem die Steuerung der Baumaschine auf der Grundlage der Satellitensignale des globalen Navigationssatellitensystems erfolgt, auf der Grundlage eines in einem bestimmten Streckenabschnitt (S1, S2) von der Steuerungseinrichtung für ein Laufwerk vorgegebenen Lenkwinkels eine Mehrzahl von Korrekturgrößen für das kinematische Modell in Abhängigkeit von der Anordnung der Vorrichtung zum Formen von fließfähigem Material auf der linken oder rechten Seite des Maschinenrahmens und/oder dem Abstand der Vorrichtung zum Formen von fließfähigem Material von der Längsachse des Maschinenrahmens ermittelt werden.

Eine weitere bevorzugte Ausführungsform des erfindungsgemäßen Verfahrens sieht vor, dass in dem Steuerungsmodus, in dem die Steuerung der Baumaschine auf der Grundlage der Satellitensignale des globalen Navigationssatellitensystems erfolgt, mindestens eine Korrekturgröße für das kinematische Modell auf der Grundlage der Differenz zwischen einer von der Steuerungseinrichtung für ein Laufwerk vorgegebenen Geschwindigkeit und der gemessenen Geschwindigkeit des Laufwerks ermittelt wird, wobei in dem Steuerungsmodus, in dem die Steuerung der Baumaschine nicht auf der Grundlage der Satellitensignale des globalen Navigationssatellitensystems erfolgt, die Position $(x_n, y_n, z_n)$ des auf die Baumaschine bezogenen Referenzpunktes (R) und der Orientierung $(\psi)$ der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung der mindestens einen Korrekturgröße für die Geschwindigkeit des mindestens einen Laufwerks bestimmt wird.

Nachfolgend wird ein Ausführungsbeispiel der Erfindung unter Bezugnahme auf die Zeichnungen im Einzelnen beschrieben.

Es zeigen:

Fig. 1A    einen Gleitschalungsfertiger in der Seitenansicht,
Fig. 1B    den Gleitschalungsfertiger von Fig. 1 in der Draufsicht,
Fig. 2A    den Gleitschalungsfertiger von Fig. 1 in der Draufsicht während der Geradeausfahrt ohne die Fördereinrichtung,
Fig. 2B    den Gleitschalungsfertiger von Fig. 1 in der Draufsicht während der Kurvenfahrt ohne die Fördereinrichtung,
Fig. 3    eine schematische Darstellung einzelner Komponenten des Gleitschalungsfertigers,
Fig. 4    den Gleitschalungsfertiger zusammen mit einem globalen Satellitennavigationssystem während der Fahrt,
Fig. 5    eine schematische Darstellung zur Veranschaulichung der Steuerung des Gleitschalungsfertigers,
Fig. 6    den Gleitschalungsfertiger in einem Maschinenkoordinatensystem,
Fig. 7    eine schematische Darstellung zur Veranschaulichung der Bewegung eines starren Körpers,

Fig. 8      den Gleitschalungsfertiger in einem UTM-Koordinatensystem zur Veranschaulichung der Bestimmung des Winkels $\eta$,

Fig. 9      den Gleitschalungsfertiger in einem UTM-Koordinatensystem zur Veranschaulichung der Bestimmung des Winkels $\mu$,

Fig. 10A      eine stark vereinfachte schematische Darstellung eines Gleitschalungsfertigers während der Fahrt von einem geraden Streckenabschnitt in eine Linkskurve und

Fig. 10B      eine stark vereinfachte schematische Darstellung eines Gleitschalungsfertigers während der Fahrt von einem geraden Streckenabschnitt in eine Rechtskurve.

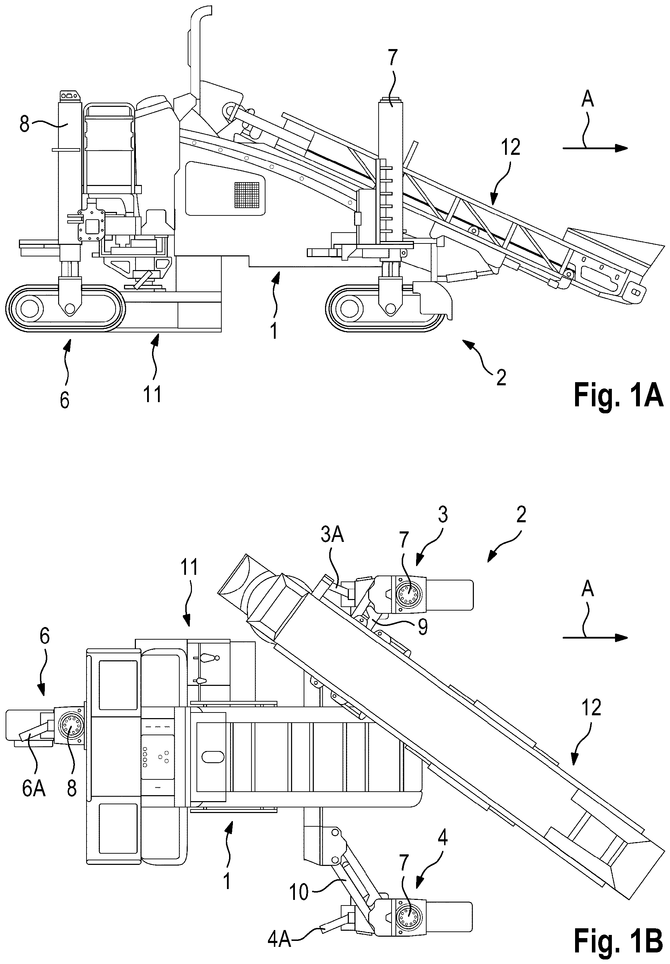

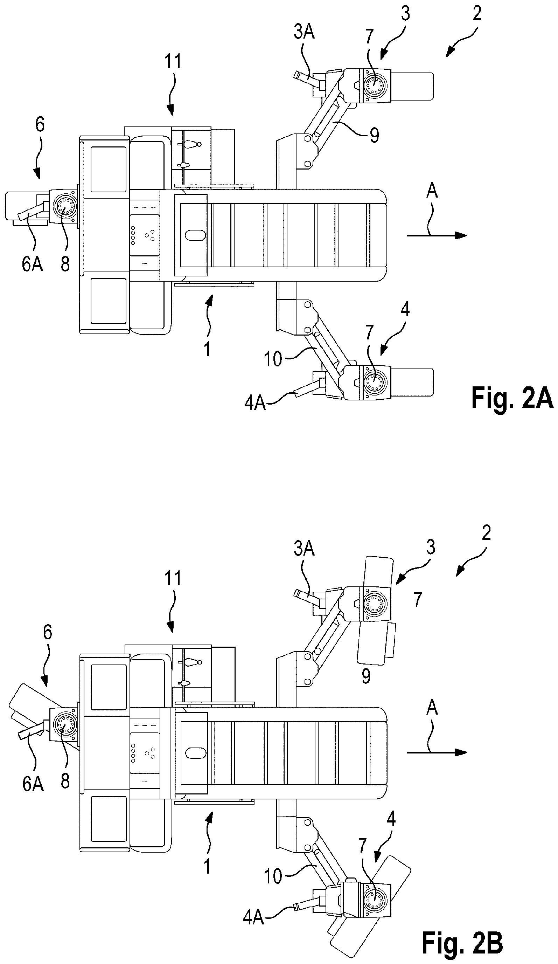

Die Figuren 1A und 2A zeigen als Beispiel für eine selbstfahrende Baumaschine einen Gleitschalungsfertiger mit einer Fördereinrichtung in der Seitenansicht (Fig. 1A) und den Gleitschalungsfertiger in der Draufsicht (Fig. 2A). Ein Gleitschalungsfertiger ist beispielsweise in der EP 1 103 659 B1 im Einzelnen beschrieben. Die Ausführungen sind aber nicht auf einen Gleitschalungsfertiger beschränkt, sondern beziehen sich allgemein auf sämtliche Baumaschinen.

Der Gleitschalungsfertiger verfügt über einen Maschinenrahmen 1, der von einem Fahrwerk 2 getragen wird. Das Fahrwerk 2 weist zwei in Arbeitsrichtung A vordere Laufwerke 3, 4 und ein hinteres Laufwerk 6 auf, die an vorderen und hinteren Hubsäulen 7, 8 befestigt sind. Die Laufwerke 3, 4 und 6 können Kettenlaufwerke oder Räder sein. Die Hubsäulen 7 der vorderen Laufwerke 3, 4 können an Trägern 9, 10 befestigt sein, die mit dem Maschinenrahmen 1 schwenkbar verbunden sind. Das hintere Laufwerk 6 ist quer zur Arbeitsrichtung A verschiebbar geführt. In Arbeitsrichtung A links ist an dem Maschinenrahmen 1 eine auswechselbare Gleitschalung 11 befestigt. Zum Transport von Material ist eine Fördereinrichtung 12 vorgesehen. Nachfolgend wird davon ausgegangen, dass das vordere linke und rechte Laufwerk 3, 4 und das hintere Laufwerk 6 lenkbare Laufwerke sind, wobei zumindest die beiden vorderen Laufwerke 3, 4 über einen eigenen Antrieb verfügen.

Die Figuren 2A und 2B zeigen den Gleitschalungsfertiger von Fig. 1 in der Draufsicht, wobei der Gleitschalungsfertiger in Fig. 2A in der Geradeausfahrt und in Fig. 2B in der Kurvenfahrt ohne die Fördereinrichtung dargestellt sind. Fig. 2B zeigt die maximalen Lenkwinkel der beiden vorderen Laufwerke 3, 4 und des hinteren Laufwerks 6. Zur Einstellung der Lenkwinkel sind an den Laufwerken 3, 4 und 6 nur andeutungsweise dargestellte Lenkaktoren 3A, 4A, 6A vorgesehen, die Kolben/Zylinder-Anordnungen sein können. Der Antrieb der Laufwerke kann mit hydraulischen Antriebsmotoren erfolgen. Weiterhin wird davon ausgegangen, dass die Laufwerke an einem Aufstandspunkt auf dem Boden aufstehen.

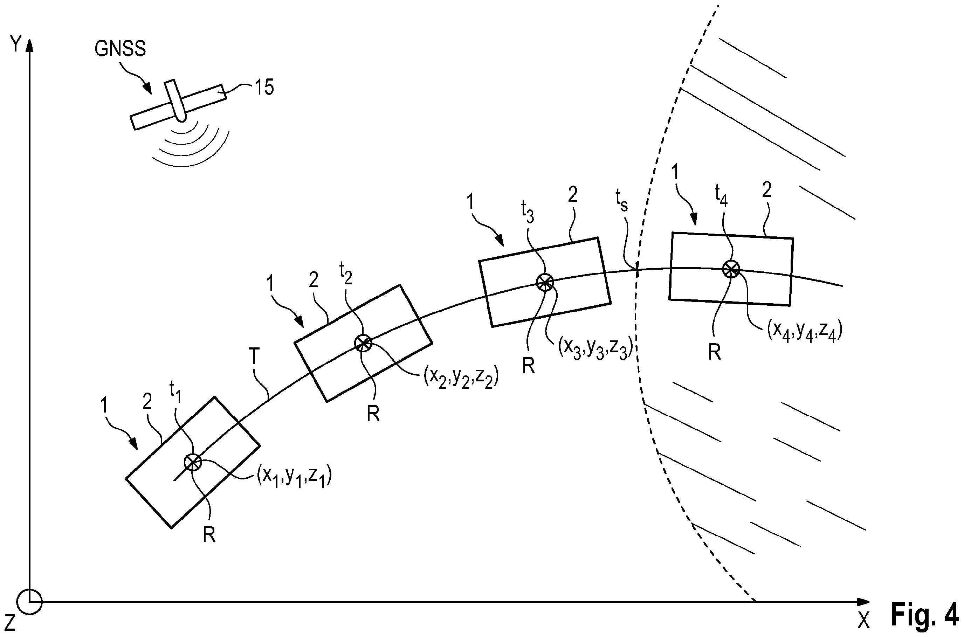

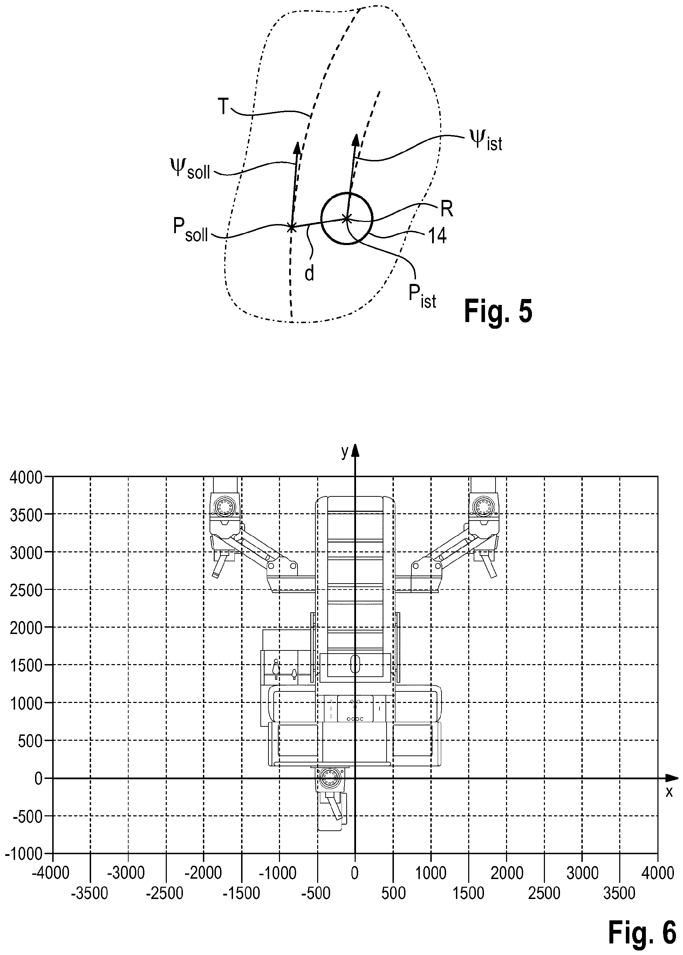

Beim Betrieb des Gleitschalungsfertigers wird eine weitgehend automatische Steuerung ohne nennenswerte Eingriffe des Fahrzeugführers angestrebt. Der Gleitschalungsfertiger verfügt daher über eine automatische Steuerung unter der Verwendung eines globalen Satellitennavigationssystems (GNSS), welche zum Stand der Technik gehört. Die Lenkwinkel der Laufwerke werden derart eingestellt, dass sich ein Referenzpunkt R auf dem Gleitschalungsfertiger bzw. der Gleitschalung entlang einer vorgegebenen Trajektorie (Soll-Wegstrecke), d. h. auf der Trajektorie T oder in einem vorgegebenen Abstand (Äquidistante) zur Trajektorie bewegt (Figuren 4 und 5). Dabei kann die Trajektorie T durch einzelne Segmente beschrieben werden, die Geraden oder Kurven umfassen können. Die Trajektorie T wird durch Koordinaten in einem von dem Gleitschalungsfertiger unabhängigen Koordinatensystem (X, Y, Z) beschrieben, die mit einem Computer in einem Büro abseits der Baustelle oder auf der Maschine ermittelt werden können. Während des Betriebs des Gleitschalungsfertigers erfolgt ein permanenter Abgleich zwischen der tatsächlichen Position $P_{ist}$ des Gleitschalungsfertigers bzw. der Gleitschalung und der gewünschten Position $P_{soll}$, so dass sich die Gleitschalung entlang der Trajektorie T bewegt.

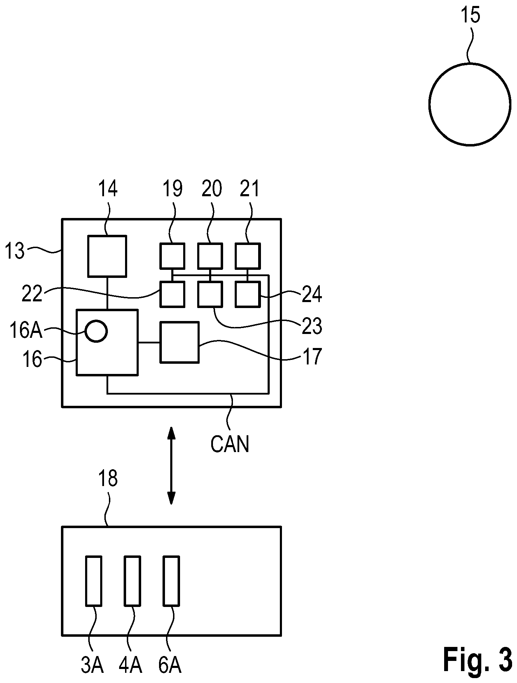

Die Baumaschine verfügt über eine Positionsbestimmungs-Einrichtung 13 zur Bestimmung der Position eines auf die Baumaschine bezogenen Referenzpunktes R und der Orientierung ($\psi$) der Baumaschine in einem von der Baumaschine unabhängigen Koordinatensystem (Fig. 3). Die Positionsbestimmungs-Einrichtung 13 weist mindestens einen Navigationssatellitensystem-Empfänger 14 zum Empfangen von Satellitensignalen eines globalen Navigationssatellitensystems (GNNS) 15 und eine Recheneinheit 16 auf, die derart konfiguriert ist, dass auf der Grundlage der Satellitensignale des globalen Navigationssatellitensystems 15 die Position (P) des Referenzpunktes R und die Orientierung ($\psi$) der Baumaschine in einem von der Baumaschine unabhängigen Koordinatensystem (X, Y, Z) bestimmt wird. Die Position und Orientierung ($\psi$) der Baumaschine beschreibenden Daten werden fortlaufend in einen Speicher 17 der Positionsbestimmungs-Einrichtung 13 eingelesen.

Die Recheneinheit 16 der Positionsbestimmungs-Einrichtung 13 kann Bestandteil einer nicht dargestellten zentralen Rechen- und Steuereinheit der Baumaschine sein. Die Recheneinheit 16 kann beispielsweise allgemeine Prozessoren, digitale Signalprozessoren (DSP) zur kontinuierlichen Bearbeitung digitaler Signale, Mikroprozessoren, anwendungsspezifische integrierte Schaltungen (ASIC), aus Logikelementen bestehende integrierte Schaltkreise (FPGA) oder andere integrierte Schaltkreise (IC) oder Hardware-Komponenten aufweisen, um die nachfolgend beschriebenen Rechenoperationen auszuführen. Auf den Hardware-Komponenten kann zur Durchführung der Verfahrensschritte ein Datenverarbeitungsprogramm (Software) laufen.

Darüber hinaus weist die Baumaschine eine mit der Positionsbestimmungs-Einrichtung 13 zusammenwirkende Steuerungseinrichtung 18 auf, die derart konfiguriert ist, dass die Lenkwinkel der lenkbaren Laufwerke 3, 4, 6 derart eingestellt werden, dass sich der Referenzpunkt R der Baumaschine entlang der vorgegebenen Trajektorie T bewegt. Die Steuerungseinrichtung 18 kann ebenfalls Bestandteil einer nicht dargestellten zentralen Rechen- und Steuereinheit der Baumaschine sein, die über die oben genannten Komponenten verfügen kann.

Fig. 4 zeigt die Bewegung der Baumaschine 1 in einem von der Baumaschine unabhängigen Koordinatensystem (X, Y, Z) zusammen mit dem GNSS. Die Baumaschine bewegt sich entlang der Trajektorie T. Zur Vereinfachung wird angenommen, dass die Trajektorie eine Bahnkurve in der Ebene ist. In dem vorliegenden Ausführungsbeispiel wird angenommen, dass die in der Zeichenebene dargestellte Trajektorie T eine durch eine Folge von Soll-Positionen (x, y, z) in dem Koordinatensystem (X, Y, Z) beschriebene Bahnkurve ist.

Während der Bewegung der Baumaschine 1 ermittelt die Positionsbestimmungs-Einrichtung 13 fortlaufend die Ist-Position (x, y, z) des Referenzpunktes R auf der Baumaschine. Die Ist-Position $P_{ist}$ der Baumaschine wird fortlaufend mit der Soll-Position $P_{soll}$ verglichen. Die Steuerungseinrichtung 18 steuert die Lenkaktoren 3A, 4A, 6A der lenkbaren Laufwerke 3, 4, 6 derart an, dass der Abstand d zwischen der von der Trajektorie beschriebenen Soll-Position $P_{soll}$ und der Ist-Position $P_{ist}$ des Referenzpunktes R auf der Baumaschine 1 minimal ist (Fig. 5). Diese Steuerung setzt die Kenntnis der aktuellen Position der Baumaschine und somit den Empfang der Satellitensignale des GNSS voraus.

Die Positionsbestimmungs-Einrichtung 13 überprüft dauernd die statistische Qualität der Positionsberechnung aufgrund der gegebenen Satellitenkonstellation. Wenn die statistische Qualität, beispielsweise in Gebäudeabdeckungen oder unter Brücken, nicht gegeben sein sollte, kann der Steuerung ein anderer Steuerungsmodus zugrunde gelegt werden, der nachfolgend im Einzelnen beschrieben wird.

In Fig. 4 ist der Bereich, in dem die statistische Qualität der Satellitensignale nicht mehr gegeben ist, durch eine Schraffur gekennzeichnet. Wenn sich die Baumaschine in diesem Bereich befindet, schaltet die Steuerungseinrichtung 18 die Steuerung von einem Steuerungsmodus auf der Grundlage der Satellitensignale auf einen Steuerungsmodus um, in dem die Steuerung der Baumaschine nicht mehr auf der Grundlage der Satellitensignale des globalen Navigationssatellitensystems erfolgt. Die Steuerungseinrichtung 18 ist derart konfiguriert, dass in diesem Steuerungsmodus während der Bewegung der Baumaschine die Position $(x_n, y_n, z_n)$ des auf die Baumaschine bezogenen Referenzpunktes R und die Orientierung ($\psi$) in dem von der Baumaschine unabhängigen Koordinatensystem (X, Y, Z) auf der Grundlage eines in der Recheneinheit 16 der Positionsbestimmungs-Einrichtung 13 implementierten kinematischen Modells 16A bestimmt wird, das die Position (P) des Referenzpunktes R und die Orientierung ($\psi$) der Baumaschine in dem von der Baumaschine unabhängigen Koordinatensystem (X, Y, Z) beschreibt. Das kinematische Modell 16A kann eine Software sein, die auf der Recheneinheit 16 läuft.

Die Positionsbestimmungs-Einrichtung 13 weist den vorderen linken und rechten Laufwerken 3, 4 und dem hinteren Laufwerk 6 zugeordnete Lenkwinkel-Sensoren 19, 20, 21 zur Bestimmung der Lenkwinkel und Geschwindigkeits-Sensoren 22, 23, 24 zur Bestimmung der Geschwindigkeiten der Laufwerke 3, 4, 6 auf, die in Fig. 3 schematisch dargestellt sind. Die Lenkwinkel-Sensoren 19, 20, 21 und Geschwindigkeits-Sensoren 22, 23, 24 sollten eine hohe Genauigkeit aufweisen. Als Lenkwinkel-Sensoren 19, 20, 21 können beispielsweise magnetoresistive Sensoren Verwendung finden, die die Stellung des Kolbens der Kolben/Zylinder-Anordnungen ermitteln, mit denen die Lenkwinkel eingestellt werden. Als Geschwindigkeits-Sensoren 22, 23, 24 können beispielsweise induktive Näherungssensoren, verwendet werden, die in den Getrieben angeordnet sind, über die die Laufwerke 3, 4, 6 angetrieben werden. Diese Sensoren erzeugen in Abhängigkeit der zurückgelegten Wegstrecke eine bestimmte Anzahl von Impulsen pro Wegstreckeneinheit bzw. in Abhängigkeit von der Geschwindigkeit der Laufwerke eine bestimmte Anzahl von Impulsen pro Zeiteinheit. Die die Lenkwinkel und Geschwindigkeiten beschreibenden Daten der Lenkwinkel-Sensoren 19, 20, 21 und Geschwindigkeits-Sensoren 22, 23, 24 stellen die Eingangsgrößen des kinematischen Modells 16A dar. Zur Übertragung dieser Daten sind geeignete Datenübertragungsmittel vorgesehen. Diese Daten können beispielsweise über einen CAN-Bus übertragen werden.

Eine weitere Eingangsgröße des kinematischen Modells 16A ist die auf der Grundlage der Satellitensignale des globalen Navigationssatellitensystems 15 bestimmte Position (P) des Referenzpunktes R und die Orientierung ($\psi$) der Baumaschine in dem von der Baumaschine unabhängigen Koordinatensystem (X, Y, Z) zu dem Zeitpunkt, zu dem die Steuerungseinrichtung 18 von dem Steuerungsmodus auf der Grundlage der Satellitensignale auf den Steuerungsmodus auf der Grundlage des kinematischen Modells umschaltet. Die Position und Orientierung ($\psi$) der Baumaschine beschreibenden Daten sind zuvor in den Speicher 17 der Positionsbestimmungs-Einrichtung 13 eingelesen worden. Die Steuerungseinrichtung 18 liest die Position (P) des Referenzpunktes R und die Orientierung ($\psi$) der Baumaschine beschreibenden Daten zum Zeitpunkt des Umschaltens auf den neuen Steuerungsmodus aus dem Speicher 17 aus.

Die Ausgangsgrößen des kinematischen Models 16A sind die Ist-Position $P_{ist}(x, y, z)$ des Referenzpunktes R auf der Baumaschine und die Orientierung ($\psi$) der Baumaschine in dem von der Baumaschine unabhängigen Koordinatensystem. Die Ist-Position $P_{ist}$ (x, y, z) des Referenzpunktes R auf der Baumaschine wird fortlaufend mit der Soll-Position $P_{soll}$ verglichen, um die Lenkwinkel der Laufwerke 3, 4, 6 derart zu steuern, dass sich der Referenzpunkt R entlang der Trajektorie T bewegt (Fig. 5).

Im Folgenden wird das kinematische Modell im Einzelnen beschrieben.

Die Position (P) und Orientierung ($\psi$) der Baumaschine wird nachfolgend in einem von der Baumaschine unabhängigen Koordinatensystem angegeben, das ein globales Koordinatensystem ist. Die Angabe der Position und Orientierung ($\psi$) der Baumaschine kann in Bezug auf einen beliebigen Referenzpunkt auf der Baumaschine erfolgen. Bei einem Gleitschalungsfertiger beispielsweise kann der Referenzpunkt ein Punkt auf der Gleitschalung, vorzugsweise ein Punkt auf der Längsachse der Gleitschalung sein.

Wenn die Position eines Referenzpunktes auf der Baumaschine und die Orientierung ($\psi$) der Baumaschine in dem globalen Koordinatensystem bekannt sind, kann auch die Position eines beliebigen anderen Referenzpunktes auf der Baumaschine in diesem Koordinatensystem bestimmt werden, da die geometrischen Abmessungen der Baumaschine bekannt sind.

Fig. 6 zeigt den Gleitschalungsfertiger in einem auf den Gleitschalungsfertiger bezogenen Maschinenkoordinatensystem (X, Y). Für das kinematische Modell wird als Referenzpunkt der Schwerpunkt der Baumaschine angenommen, der sich nach den folgenden Gleichungen berechnet:

$$x = \frac{X_{FL} \cdot m_{FL} + X_{FR} \cdot m_{FR}}{m_M} \qquad (2.3.2.1)$$

$$y = \frac{Y_{FL} \cdot m_{FL} + Y_{FR} \cdot m_{FR}}{m_M} \qquad (2.3.2.2)$$

,wobei $m_{FL}$ und $m_{FR}$ die an den vorderen Laufwerken 3, 4 gemessenen Gewichte, $m_M$ das Gesamtgewicht des Gleitschalungsfertigers und $X_{FL}$ der Abstand des vorderen linken Laufwerks 3 und $X_{FR}$ der Abstand des vorderen rechten Laufwerks 4 vom Ursprung des Maschinenkoordinatensystems ist.

Es wird angenommen, dass die Baumaschine ein starrer Körper ist. Für einen starren Körper kann die Geschwindigkeit an einem beliebigen Punkt nach der folgenden Gleichung berechnet werden:

$$\vec{V}_P = \vec{V}_K + \vec{\omega} \times \overline{KP}(t) \qquad (4.1.1)$$

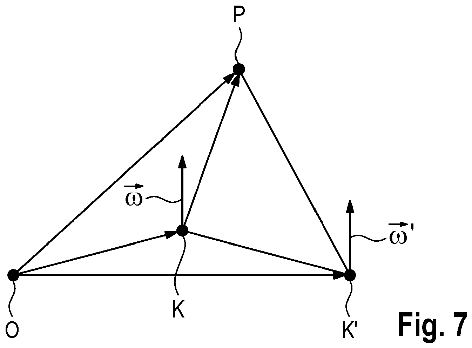

, wobei $V_P$ der zu ermittelnde Geschwindigkeitsvektor eines beliebigen Punktes des starren Körpers, $V_K$ der Geschwindigkeitsvektor eines Punktes des starren Körpers, an dem der Geschwindigkeitsvektor bekannt ist, $\omega$ die Winkelgeschwindigkeit und $KP(t)$ der Abstandsvektor zwischen diesen beiden Punkten ist (Fig. 7).

Für die Baumaschine ergeben sich am Schwerpunkt die folgenden Geschwindigkeitsvektoren:

$$\vec{V}_{CG} = \vec{V}_{FL} + \vec{\omega} \times \vec{d}_{FL\text{-}CG} \qquad (4.1.2)$$

$$\vec{V}_{CG} = \vec{V}_{FR} + \vec{\omega} \times \vec{d}_{FR\text{-}CG} \qquad (4.1.3)$$

$$\vec{V}_{CG} = \vec{V}_{R} + \vec{\omega} \times \vec{d}_{R\text{-}CG} \qquad (4.1.4)$$

,wobei $V_{FL}$ der Geschwindigkeitsvektor des Aufstandspunktes des vorderen linken Laufwerks 3, $V_{FR}$ des Geschwindigkeitsvektors des Aufstandspunktes des vorderen rechten Laufwerks 4 und $V_R$ der Geschwindigkeitsvektor des Aufstandspunktes des hinteren Laufwerks 6, $V_{CG}$ der Geschwindigkeitsvektor der Baumaschine am Schwerpunkt, $d_{FL\text{-}CG}$ der Abstandsvektor zwischen dem Aufstandspunkt des vorderen linken Laufwerks 3 und dem Schwerpunkt, $d_{FR\text{-}CG}$ der Abstandsvektor zwischen dem Aufstandspunkt des vorderen rechten Laufwerks 4 und dem Schwerpunkt, $d_{R\text{-}CG}$ der Abstandsvektor zwischen dem Aufstandspunkt des hinteren Laufwerks 6 und dem Schwerpunkt sind.

Nachfolgend werden die obigen Vektoren in das globale Koordinatensystem transformiert, um die Bewegung der Baumaschine in einem von der Baumaschine unabhängigen Koordinatensystem beschreiben zu können. Hierzu werden die Winkel $\eta$ und $\mu$ eingeführt. Nachfolgend wird die Position und Orientierung ($\psi$) der Baumaschine in einem UTM-Koordinatensystem beschrieben. Die Position und Orientierung ($\psi$) der Baumaschine kann aber auch in einem anderen globalen Koordinatensystem beschrieben werden, beispielsweise in einem Gauß-Krüger-Koordinatensystem oder MGRS-System.

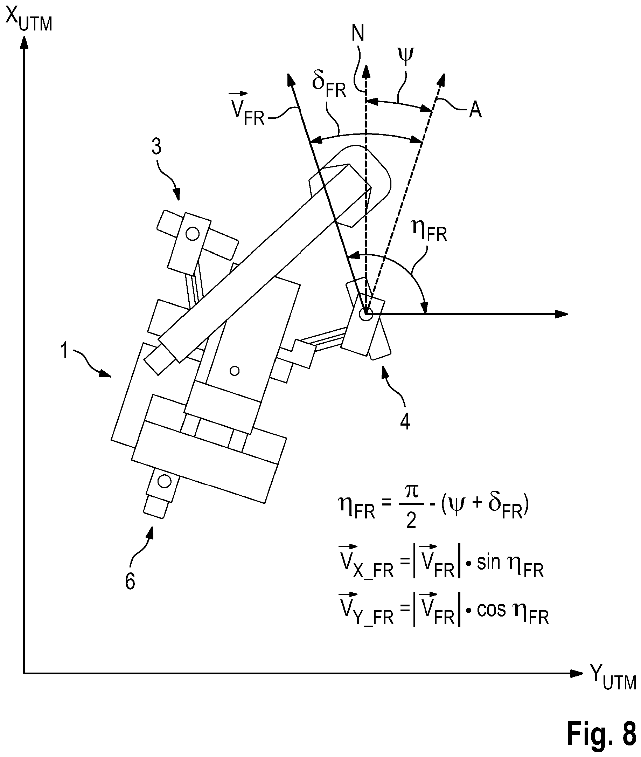

Fig. 8 zeigt die Baumaschine in dem UTM-Koordinatensystem, wobei die Baumaschine eine Linkskurve fährt. In Fig. 8 ist die Arbeitsrichtung A der Baumaschine, der Geschwindigkeitsvektors $V_{FR}$ des Aufstandspunktes des vorderen rechten Laufwerks 4, der Lenkwinkel $\delta$ des vorderen rechten Laufwerks 4, und der Winkel $\psi$ im UTM-Koordinatensystem dargestellt. In Fig. 8 ist $\psi$ der Winkel zwischen der Arbeitsrichtung A und der Nord-Süd-Richtung ("Hochwert") N ("false northing").

Der Winkel $\eta$ berechnet sich nach der folgenden Gleichung:

$$\eta_{FR} = \frac{\pi}{2} - (\psi + \delta_{FR})$$

Mit dem Winkel $\eta$ kann der Geschwindigkeitsvektor $V_{FR}$ des vorderen rechten Laufwerks 4 in Bezug auf die Y-Achse und X-Achse des Koordinatensystems in die Vektoren $V_{Y\_FR}$ und $V_{X\_FR}$ zerlegt werden, die sich nach den folgenden Gleichungen berechnen:

$$\vec{V}_{X\_FR} = \left|\vec{V}_{FR}\right| \cdot \sin \eta_{FR}$$

$$\vec{V}_{Y\_FR} = \left|\vec{V}_{FR}\right| \cdot \cos \eta_{FR}$$

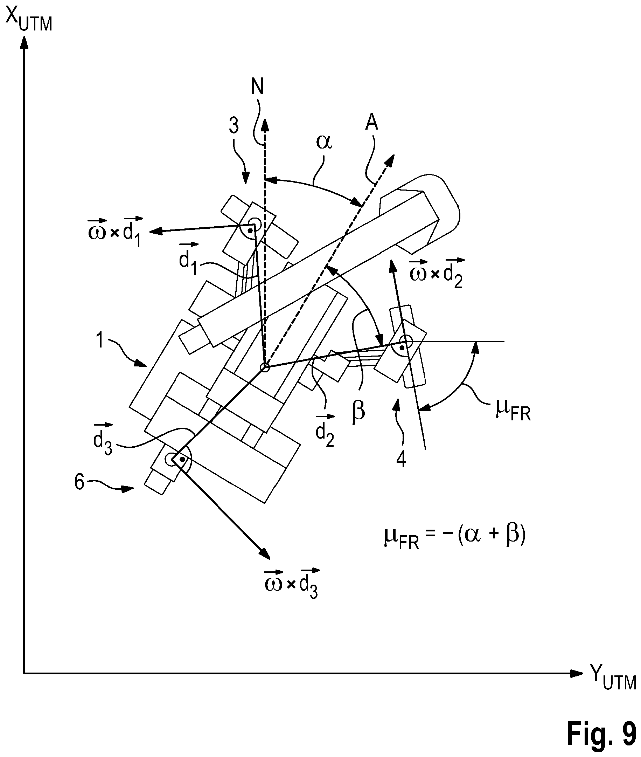

Um die Vektoren $\omega$ x $d_1$, $\omega$ x $d_2$, $\omega$ x $d_3$ in Bezug auf die X- Achse und Y-Achse des UTM-Koordinatensystems zerlegen zu können, werden die Winkel $\alpha$ und $\beta$ berechnet, wobei der Winkel $\alpha$ die Orientierung ($\psi$) der Baumaschine in dem UTM-Koordinatensystem und der Winkel $\beta$ die Orientierung ($\psi$) des Abstandsvektors $d_2$ in dem Maschinenkoordinatensystem beschreibt. Der Abstandsvektors $d_2$ wird aus den bekannten geometrischen Abmessungen der Baumaschine berechnet. In Fig. 9 sind die Vektoren $\omega$ x $d_1$, $\omega$ x $d_2$, $\omega$ x $d_3$ und die Winkel $\alpha$ und $\beta$ dargestellt. Der Winkel $\mu_{FR}$ berechnet sich nach der folgenden Gleichung:

$$\mu_{FR} = -(\alpha + \beta)$$

Mit den obigen Winkeln können die Gleichungen (4.1.2), (4.1.3), (4.1.4) wie folgt umgeformt werden:

$$V_{Y_{UTM}} = \left|\vec{V}_{FL}\right| \cdot \cos \eta_{FL} + \left|\vec{\omega}\right| \cdot d_1 \cdot \cos \mu_{FL}$$

$$V_{X_{UTM}} = \left|\vec{V}_{FL}\right| \cdot \sin \eta_{FL} + \left|\vec{\omega}\right| \cdot d_1 \cdot \sin \mu_{FL}$$

$$V_{Y_{UTM}} = \left|\vec{V}_{FR}\right| \cdot \cos \eta_{FR} + \left|\vec{\omega}\right| \cdot d_2 \cdot \cos \mu_{FR}$$

$$V_{X_{UTM}} = \left|\vec{V}_{FR}\right| \cdot \sin \eta_{FR} + \left|\vec{\omega}\right| \cdot d_2 \cdot \sin \mu_{FR} \qquad (4.1.5)$$

$$V_{Y_{UTM}} = \left|\vec{V}_{R}\right| \cdot \cos \eta_{R} + \left|\vec{\omega}\right| \cdot d_3 \cdot \cos \mu_{R}$$

$$V_{X_{UTM}} = \left|\vec{V}_{R}\right| \cdot \sin \eta_{R} + \left|\vec{\omega}\right| \cdot d_3 \cdot \sin \mu_{R}$$

,wobei $V_{Y\_UTM}$ die Geschwindigkeit des Schwerpunktes der Baumaschine in Richtung der Y-Achse und $V_{Y\_UTM}$ die Geschwindigkeit des Schwerpunktes der Baumaschine in Richtung der X-Achse in dem UTM-Koordinatensystem und $V_{FL}$, $V_{FR}$ und $V_R$ die mit den Geschwindigkeits-Sensoren 22, 23, 24 gemessenen Geschwindigkeiten des vorderen linken Laufwerks 3, vorderen rechten Laufwerks 4 und hinteren Laufwerks 6 sind.

Die Gleichungen (4.1.5) können wie folgt umgeschrieben werden:

$$\left|\vec{V}_{FL}\right| \cdot \cos \eta_{FL} = V_{Y_{UTM}} - \left|\vec{\omega}\right| \cdot d_1 \cdot \cos \mu_{FL}$$

$$\left|\vec{V}_{FL}\right| \cdot \sin \eta_{FL} = V_{X_{UTM}} - \left|\vec{\omega}\right| \cdot d_1 \cdot \sin \mu_{FL}$$

$$\left|\vec{V}_{FR}\right| \cdot \cos \eta_{FR} = V_{Y_{UTM}} - \left|\vec{\omega}\right| \cdot d_2 \cdot \cos \mu_{FR}$$

$$\left|\vec{V}_{FR}\right| \cdot \sin \eta_{FR} = V_{X_{UTM}} - \left|\vec{\omega}\right| \cdot d_2 \cdot \sin \mu_{FR}$$ 

$$\left|\vec{V}_{R}\right| \cdot \cos \eta_{R} = V_{Y_{UTM}} - \left|\vec{\omega}\right| \cdot d_3 \cdot \cos \mu_{R}$$

$$\left|\vec{V}_{R}\right| \cdot \sin \eta_{R} = V_{X_{UTM}} - \left|\vec{\omega}\right| \cdot d_3 \cdot \sin \mu_{R}$$

(4.1.6)

Um die Bewegung der Baumaschine unter Berücksichtigung der realen Bedingungen mit höherer Genauigkeit durch das kinematische Modell 16A abbilden zu können, wird nachfolgend der Lagrange-Ansatz verwendet, wobei die Nebenbedingungen durch Setzen von Funktionen auf gegebene Werte definiert werden. Diese Methode führt eine neue unbekannte skalare Variable für jede Nebenbedingung ein, einen Lagrange-Multiplikator, und definiert eine Linearkombination, die die Multiplikatoren als Koeffizienten einbindet (WIKIPEDIA: Lagrange-Multiplikator).

Mit dem Lagrange-Ansatz ergibt sich das folgende Gleichungssystem:

$$V_{FL} \cdot \cos \eta_{FL} = V_{Y_{UTM}} - \omega \cdot d_1 \cdot \cos \mu_{FL} + e_1$$

$$V_{FL} \cdot \sin \eta_{FL} = V_{X_{UTM}} - \omega \cdot d_1 \cdot \sin \mu_{FL} + e_2$$

$$V_{FR} \cdot \cos \eta_{FR} = V_{Y_{UTM}} - \omega \cdot d_2 \cdot \cos \mu_{FR} + e_3$$

$$V_{FR} \cdot \sin \eta_{FR} = V_{X_{UTM}} - \omega \cdot d_2 \cdot \sin \mu_{FR} + e_4$$

$$V_{R} \cdot \cos \eta_{R} = V_{Y_{UTM}} - \omega \cdot d_3 \cdot \cos \mu_{R} + e_5$$

$$V_{R} \cdot \sin \eta_{R} = V_{X_{UTM}} - \omega \cdot d_3 \cdot \sin \mu_{R} + e_6$$

(4.2.1)

Das Gleichungssystem (4.2.1) kann wie folgt umgeschrieben werden:

$$\begin{bmatrix} V_{FL} \cdot \cos \eta_{FL} \\ V_{FL} \cdot \sin \eta_{FL} \\ V_{FR} \cdot \cos \eta_{FR} \\ V_{FR} \cdot \sin \eta_{FR} \\ V_{R} \cdot \cos \eta_{H} \\ V_{R} \cdot \sin \eta_{H} \end{bmatrix} = \begin{bmatrix} 1 & 0 & -d_1 \cdot \cos \mu_{FL} \\ 0 & 1 & -d_1 \cdot \sin \mu_{FL} \\ 1 & 0 & -d_2 \cdot \cos \mu_{FR} \\ 0 & 1 & -d_2 \cdot \sin \mu_{FR} \\ 1 & 0 & -d_3 \cdot \cos \mu_{R} \\ 0 & 1 & -d_3 \cdot \sin \mu_{R} \end{bmatrix} \cdot \begin{bmatrix} V_{Y_{UTM}} \\ V_{X_{UTM}} \\ \omega \end{bmatrix} + \begin{bmatrix} e_1 \\ e_2 \\ e_3 \\ e_4 \\ e_5 \\ e_6 \end{bmatrix}$$

(4.2.8)

$$y = Ax + e$$

(4.2.9)

Der in der Recheneinheit 16 der Positionsbestimmungs-Einrichtung 13 implementierte Rechenalgorithmus sieht eine fortlaufende Berechnung (i= 1, 2, 3 ... n) der Geschwindigkeit am Schwerpunkt der Baumaschine in Richtung der Y-Achse ($V_{Y\_UTM}$) und der X-Achse ($V_{X\_UTM}$) des UTM-Koordinatensystems sowie der Winkelgeschwindigkeit $\omega$ nach dem Gleichungssystem (4.2.8) zu aufeinanderfolgenden Zeitpunkten ($t_1$, $t_2$, $t_3$, ... $t_n$) vor. Die Lenkwinkel und die Geschwindigkeiten der Laufwerke 3, 4, 6 werden mit den Lenkwinkel-Sensoren 19, 20, 21 und den Geschwindigkeits-Sensoren 22, 23, 24 fortlaufend gemessen. Das Zeitintervall zwischen zwei aufeinanderfolgenden Messungen ist $\Delta t$. Beispielsweise werden Lenkwinkel und Geschwindigkeit 10 mal pro Sekunde gemessen ($\Delta t=0.1$ s). Die Recheneinheit

11

16 empfängt die Messwerte (Daten) der Lenkwinkel- und Geschwindigkeits-Sensoren 19, 20, 21, 22, 23, 24 und berechnet die Geschwindigkeit $V_{Y\_UTM}$ und $V_{X\_UTM}$ sowie die Winkelgeschwindigkeit $\omega$ zu den aufeinanderfolgenden Zeitpunkten ($t_1$, $t_2$, $t_3$, ... $t_n$). Nach Ablauf jedes Zeitintervalls $\Delta t$ wird die Position und Orientierung ($\psi$) der Baumaschine für den nachfolgenden Zeitpunkt aus der zu dem vorhergehenden Zeitpunkt berechneten Position und Orientierung ($\psi$) nach den folgenden Gleichungen berechnet.

$$Y_{UTM}(i) = Y_{UTM}(i-1) + V_Y \cdot \Delta t \qquad (4.2.10)$$

$$X_{UTM}(i) = X_{UTM}(i-1) + V_X \cdot \Delta t \qquad (4.2.11)$$

$$\psi(i) = \psi(i-1) + \omega \cdot \Delta t \qquad (4.2.12)$$

,wobei $\psi$ die Orientierung ($\psi$) der Baumaschine im UTM-Koordinatensystem, $\Delta t$ das Zeitintervall zwischen zwei aufeinanderfolgenden Messungen und i die Nummer der Messung ist.

Zu dem Zeitpunkt ts, zu dem auf den Steuerungsmodus, in dem die Steuerung nicht auf der Grundlage der Satellitensignale erfolgt, umgeschaltet wird, sind Position und Orientierung ($\psi$) der Baumaschine im UTM-Koordinatensystem bekannt, da Position und Orientierung ($\psi$) der Baumaschine zuvor auf der Grundlage der Satellitensignale des globalen Navigationssatellitensystems 15 bestimmt und abgespeichert worden sind. Die zuvor bestimmte Position und Orientierung ($\psi$) der Baumaschine wird von der Recheneinheit 16 der Positionsbestimmungs-Einrichtung 13 zum Zeitpunkt ts aus dem Speicher 17 ausgelesen, so dass die neue Position und Orientierung ($\psi$) berechnet werden kann. Die fortlaufend jeweils neu berechnete Position und Orientierung ($\psi$) werden in den Speicher 17 eingelesen und für die nachfolgenden Berechnungen wieder aus dem Speicher ausgelesen.

Während des Steuerungsmodus, in dem die Position und Orientierung ($\psi$) der Baumaschine nicht mit dem globalen Navigationssatellitensystem 15 bestimmt werden, sondern auf der Grundlage des kinematischen Modells 16A berechnet werden, stellt die Steuerungseinrichtung 18 die Lenkwinkel der Laufwerke 3, 4, 6 derart ein, dass der Abstand (d) zwischen der von der Trajektorie beschriebenen Soll-Position ($P_{soll}$) und der auf der Grundlage des kinematischen Modells 16A von der Positionsbestimmungs-Einrichtung 13 bestimmten Ist-Position ($P_{ist}$) des Referenzpunktes R minimal ist (Fig. 5). Folglich kann die Steuerung der Baumaschine auch ohne den Empfang der Satellitensignale erfolgen. Wenn die Satellitensignale wieder empfangen werden, kann auf den Steuerungsmodus unter Verwendung des globalen Navigationssatellitensystems 15 umgeschaltet werden. Die Umschaltung kann automatisch erfolgen, wenn die statistische Qualität der Positionsberechnung wieder gegeben ist. Hierzu ermittelt die Positionsbestimmungs-Einrichtung 13 fortlaufend die Qualität der Signale. Zu dem Zeitpunkt der Umschaltung auf den Steuerungsmodus unter Verwendung des globalen Navigationssatellitensystems 15 kann die Abweichung der berechneten Position von der mit dem Navigationssatellitensystem bestimmten Position ermittelt werden. Nach der Umschaltung wird wieder die mit dem Navigationssatellitensystem bestimmte Position und Orientierung ($\psi$) fortlaufend in den Speicher 17 eingelesen, um für einen möglichen Ausfall der satellitengestützen Steuerung zur Verfügung zu stehen.

Das oben beschriebene kinematische Modell setzt physikalisch ideale Bedingungen voraus, das heißt, dass die mit den Lenkwinkel-Sensoren 19, 20, 21 und den Geschwindigkeits-Sensoren 22, 23, 24 ermittelten Lenkwinkel bzw. Geschwindigkeiten den tatsächlich erzielten Richtungsänderungen bzw. tatsächlich erzielten Fortbewegungen gegenüber dem Grund entsprechen. In der Praxis ist dies aber nicht der Fall. In der Praxis ergibt sich eine Differenz zwischen der theoretischen Bewegung, wie sie durch das kinematische Modell errechnet werden kann, und der tatsächlich unter den realen Bedingungen sich einstellenden Bewegung. Dieser Effekt bzw. diese Differenz wird auch als Schlupf bezeichnet.

In Versuchen mit einem Gleitschalungsfertiger, dessen Gleitschalung nicht mit Beton gefüllt ist, hat sich gezeigt, dass während einer Geradeausfahrt Korrekturen des Lenkwinkels erforderlich sind. Es hat sich gezeigt, dass diese Korrekturen auf den Schlupf zurückzuführen sind. Weiterhin hat sich gezeigt, dass die zur Kompensation erforderlichen Korrekturen aber relativ klein sind.

Für die Modellierung der Bewegung der Baumaschine wird angenommen, dass die Summe der Korrekturen des Linkwinkels in die auf die Arbeitsrichtung A bezogene linke bzw. rechte Richtung über die gesamte Strecke der Geradeausfahrt Null ist.

$$s = \frac{\sum_{i=1}^{n} \varphi(i)}{n}. \qquad (4.3.1)$$

,wobei $n$ die Anzahl der Messungen des Lenkwinkels $\varphi$ des jeweiligen Laufwerks ist.

Bei dem Ausführungsbeispiel des Gleitschalungsfertiger hat sich in Versuchen bei nicht gefüllter Betonmulde gezeigt, dass eine Korrektur der Lenkwinkel der vorderen Laufwerke 3, 4 erforderlich ist, eine Korrektur des Lenkwinkels des hinteren Laufwerks 6 aber zu vernachlässigen ist. In Versuchen wurden für den Lenkwinkel $\varphi$ des vorderen linken Laufwerks 3 ein Korrekturwert von -0.81 *(Offset* [°]), den Lenkwinkel $\varphi$ des vorderen rechten Laufwerks 4 ein Korrekturwert von -0.71 *(Offset* [°]) und den Lenkwinkel $\varphi$ des hinteren Laufwerks 6 ein Korrekturwert von 0.005 (*Offset* [°]) ermittelt.

Für die Korrektur der gemessenen Lenkwinkel wird der für das jeweilige vordere Laufwerk empirisch ermittelte Offset-Wert von dem entsprechenden Winkel $\eta$ abgezogen.

Damit ergibt sich das folgende Gleichungssystem:

$$V_{FL} \cdot \cos(\eta_{FL} - s_{FL}) = V_{Y_{IMU}} - \omega \cdot d_1 \cdot \cos \mu_{FL} + e_1$$

$$V_{FL} \cdot \sin(\eta_{FL} - s_{FL}) = V_{X_{IMU}} - \omega \cdot d_1 \cdot \sin \mu_{FL} + e_2$$

$$V_{FR} \cdot \cos(\eta_{FR} - s_{FR}) = V_{Y_{IMU}} - \omega \cdot d_2 \cdot \cos \mu_{FR} + e_3$$

$$V_{FR} \cdot \sin(\eta_{FR} - s_{FR}) = V_{X_{IMU}} - \omega \cdot d_2 \cdot \sin \mu_{FR} + e_4 \qquad (4.3.2)$$

$$V_R \cdot \cos \eta_R = V_{Y_{IMU}} - \omega \cdot d_3 \cdot \cos \mu_R + e_5$$

$$V_R \cdot \sin \eta_R = V_{X_{IMU}} - \omega \cdot d_3 \cdot \sin \mu_R + e_6$$

,wobei $s_{FL}$ der Offset-Wert des vorderen linken Laufwerks 3 und $s_{FR}$ der Offset-Wert des vorderen rechten Laufwerks 4 ist.

Darüber hinaus hat sich in Versuchen gezeigt, dass bei dem Gleitschalungsfertiger aufgrund des Schlupfs die Geschwindigkeit der Laufwerke Schwankungen unterworfen ist. Daher wird für jedes Laufwerk 3, 4, 6 aus der mit dem entsprechenden Geschwindigkeits-Sensor 22, 23, 24 in einem bestimmten repräsentativen Zeitintervall gemessenen Geschwindigkeiten eine mittlere Geschwindigkeit und als Offset-Wert für den Geschwindigkeits-Sensor die Differenz zwischen der vorgegebenen Soll-Geschwindigkeit und der mittleren Geschwindigkeit berechnet. Bei dem vorliegenden Gleitschalungsfertiger wurden in Versuchen für das linke vordere Laufwerk 3 Abweichungen von der Soll-Geschwindigkeit von 0.11 cm/s, für das vordere rechte Laufwerk Abweichungen von der Soll-Geschwindigkeit von 0.10 cm/s und für das hintere Laufwerk 6 Abweichungen von der Soll-Geschwindigkeit von 0.16 cm/s. Es hat sich gezeigt, dass die gemessene Geschwindigkeit für sämtliche Laufwerke kleiner als die tatsächliche Geschwindigkeit ist.

Damit ergibt sich das folgende Gleichungssystem:

$$(V_{FL} + v_{FL}) \cdot \cos(\eta_{FL} - s_{FL}) = V_{Y_{IMU}} - \omega \cdot d_1 \cdot \cos \mu_{FL} + e_1$$

$$(V_{FL} + v_{FL}) \cdot \sin(\eta_{FL} - s_{FL}) = V_{X_{IMU}} - \omega \cdot d_1 \cdot \sin \mu_{FL} + e_2$$

$$(V_{FR} + v_{FR}) \cdot \cos(\eta_{FR} - s_{FR}) = V_{Y_{IMU}} - \omega \cdot d_2 \cdot \cos \mu_{FR} + e_3$$

$$(V_{FR} + v_{FR}) \cdot \sin(\eta_{FR} - s_{FR}) = V_{X_{IMU}} - \omega \cdot d_2 \cdot \sin \mu_{FR} + e_4 \qquad (4.4.1)$$

$$(V_R + v_R) \cdot \cos \eta_R = V_{Y_{IMU}} - \omega \cdot d_3 \cdot \cos \mu_R + e_5$$

$$(V_R + v_R) \cdot \sin \eta_R = V_{X_{IMU}} - \omega \cdot d_3 \cdot \sin \mu_R + e_6$$

,wobei $v_{FL}$ der Offset-Wert des vorderen linken Laufwerks 3, $v_{FR}$ der Offset-Wert des vorderen rechten Laufwerks 4 und $v_R$ der Offset-Wert des hinteren Laufwerks 6 ist.

Mit den oben beschriebenen Korrekturen kann die Genauigkeit der Bewegung der Baumaschine verbessert werden. Die Bestimmung der Lenkwinkel und der Geschwindigkeiten sowie deren Korrekturen sind nicht auf die Laufwerke beschränkt, die in Bezug auf den Gleitschalungsfertiger als Beispiel für eine Baumaschine beschrieben sind. Wenn beispielsweise vier Laufwerke antreibbare und/oder lenkbare Laufwerke sind, können die Lenkwinkel und Geschwindigkeiten auch von vier Laufwerken Berücksichtigung finden. Es können aber auch die Lenkwinkel und Geschwindigkeiten von nur zwei Laufwerken als Eingangsgrößen des kinematischen Modells verwendet werden.

Die oben beschriebenen Versuche zeigen das Verhalten eines Gleitschalungsfertigers, dessen Betonmulde nicht mit Beton gefüllt ist. Während des Betriebs eines Gleitschalungsfertigers ist die Betonmulde aber mit Beton gefüllt, der ein relativ hohes Gewicht hat. In der Praxis zeigt sich, dass das relativ hohe Gewicht der mit Beton gefüllten Betonmulde und die Interaktion des Betons mit der Bodenoberfläche einen Einfluss auf die Bewegung der Baumaschine in dem Gelände ausüben können. Die gleichen Effekte können bei einer Straßenfräse wegen einer außermittigen Anordnung der Fräs-/Schneidwalze oder einem Straßenfertiger wegen einer außermittigen Anordnung der Einbaubohle auftreten. Dieser Aspekt der Erfindung, der von besonderer erfinderischer Bedeutung ist, wird nachfolgend beschrieben.

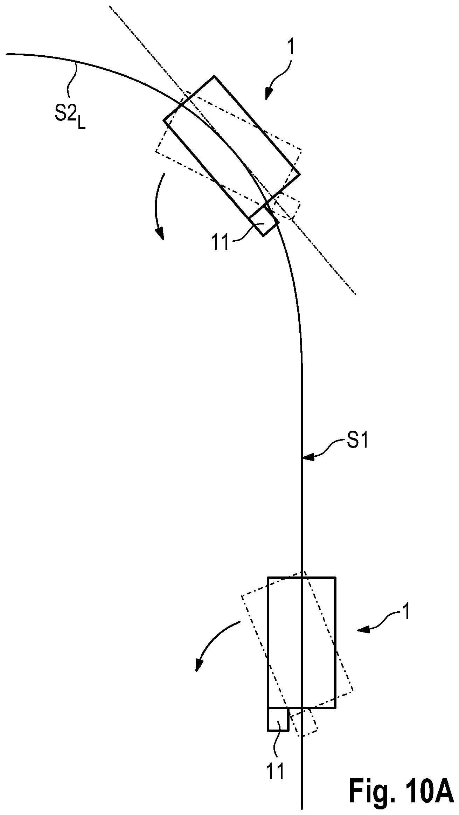

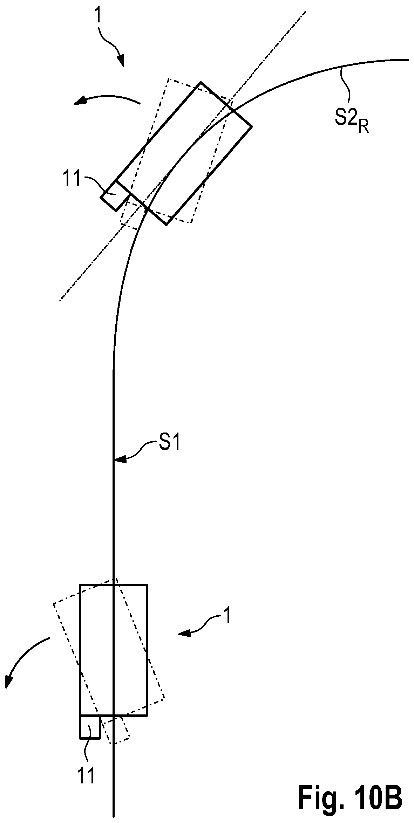

Fig. 10A zeigt in einer stark vereinfachten Darstellung eine selbstfahrende Baumaschine, die sich zunächst auf einer Geraden S1 bewegen und dann in eine Linkskurve $S2_L$ fahren soll, während Fig. 10B eine Baumaschine zeigt, die sich zunächst auf einer Geraden S1 bewegen und dann in eine Rechtskurve $S2_R$ fahren soll. Bei dem vorliegenden Ausführungsbeispiel weist die der Steuerung der Baumaschine zugrunde liegende Trajektorie also einen geraden Streckenabschnitt auf, an den sich ein gekrümmter Streckenabschnitt anschließt. Bei dem vorliegenden Ausführungsbeispiel ist der gekrümmte Streckenabschnitt ein Viertelkreis.

Die Baumaschine kann beispielsweise ein Gleitschalungsfertiger oder eine Straßenfräse oder ein Straßenfertiger sein. Wenn beispielsweise die Betonmulde eines Gleitschalungsfertigers nicht auf der Längsachse des Maschinenrahmens angeordnet ist, sondern seitlich zu der Längsachse des Maschinenrahmens versetzt ist, was in der Praxis der Fall ist, übt die Betonmulde bei der Bewegung des Gleitschalungsfertigers ein Drehmoment um dessen Hochachse aus, das dazu führt, dass der Gleitschalungsfertiger eine Kurve fährt, obwohl für die Laufwerke ein Lenkwinkel von 0° eingestellt ist. Entsprechend übt eine seitlich zu der Längsachse des Maschinenrahmens angeordnete Fräswalze einer Straßenfräsmaschine ein Drehmoment aus, so dass die Straßenfräsmaschine eine Kurve fährt, obwohl der Lenkwinkel 0° ist.

Die Figuren 10A und 10B zeigen in einer stark vereinfachten schematischen Darstellung eine Baumaschine, insbesondere einen Gleitschalungsfertiger oder eine Straßenfräse oder einen Straßenfertiger, wobei die außermittig angeordnete Betonmulde bzw. Fräswalze bzw. Einbaubohle mit dem Bezugszeichen "11" bezeichnet ist. Wenn die Betonmulde bzw. Fräswalze bzw. Einbaubohle 11 in Arbeitsrichtung auf der linken Seite der Längsachse des Maschinenrahmens 1 angeordnet ist, wird ein Drehmoment auf den Maschinenrahmen 1 ausgeübt, das den Maschinenrahmen leicht nach links dreht. Folglich fährt ein Gleitschalungsfertiger mit einer auf der linken Seite angeordneten Betonmulde bzw. eine Straßenfräse mit einer auf der linken Seite angeordneten Fräswalze 11 bei geradeaus gestellten Laufwerken eine leichte Linkskurve. Ein Gleitschalungsfertiger bzw. eine Straßenfräse mit einer auf der rechten Seite angeordneten Betonmulde bzw. Fräswalze 11 fährt bei geradeaus gestellten Laufwerken hingegen eine leichte Rechtskurve.

Wenn die Betonmulde bzw. Fräswalze 11 auf der linken Seite angeordnet ist, verringert sich bei nach links eingelenkten Laufwerken (Fig. 10A) der tatsächlich gefahrene Kurvenradius, während sich bei nach rechts eingelenkten Laufwerken (Fig. 10B) der tatsächlich gefahrene Kurvenradius vergrößert. Ist die Betonmulde bzw. Fräswalze 11 auf der rechten Seite angeordnet, vergrößert sich bei nach links eingelenkten Laufwerken (Fig. 10A) der tatsächlich gefahrene Kurvenradius, während sich bei nach rechts eingelenkten Laufwerken (Fig. 10B) der tatsächlich gefahrene Kurvenradius verringert.

Die oben beschriebenen die Bewegung der Baumaschine beeinflussenden Faktoren werden nachfolgend unter dem weiter oben bereits eingeführten Begriff Schlupf zusammengefasst.

Bei der automatischen Steuerung der Baumaschine auf der Grundlage der Satellitensignale des globalen Navigationssatellitensystems spielt der Schlupf insofern keine Rolle, da die Lenkwinkel und die Geschwindigkeiten der Laufwerke fortlaufend so eingestellt bzw. korrigiert werden, dass die Baumaschine der Trajektorie folgt. Ohne diese Steuerung müsste der Fahrzeugführer aber entsprechend "Gegenlenken", um die Baumaschine auf der gewünschten Fahrspur zu halten.

Ein besonderer Aspekt der Erfindung liegt darin, bei der Steuerung der Baumaschine auf der Grundlage des kinematischen Modells auch den Schlupf zu berücksichtigen.

Zur Kompensation des Schlupfes wird eine Korrekturgröße für den Lenkwinkel in das kinematische Modell eingeführt, der insbesondere den Einfluss des Gewichts des Betons und dessen Interaktion mit der Bodenoberfläche auf das Lenkverhalten korrigiert. Diese Korrekturgröße kann grundsätzlich in Versuchen in Abhängigkeit von weiteren Größen empirisch ermittelt werden, was aber nicht Gegenstand der Erfindung ist. Die Korrekturgröße kann in Abhängigkeit von der Seite, auf der die mit Beton gefüllten Betonmulde (Fräswalze, Einbaubohle) angeordnet ist, dem Abstand des Schwerpunktes der Betonmulde (Fräswalze, Einbaubohle) von der Längsachse des Maschinenrahmens, der Geschwindigkeit der Baumaschine und dem Verlauf der Trajektorie ermittelt werden. Für die einzelnen Fälle können unterschiedliche Korrekturgrößen in dem Speicher 17 der Positionsbestimmungs-Einrichtung gespeichert und für die Berechnung der Position und Orientierung ($\psi$) der Baumaschine auf der Grundlage des kinematischen Modells herangezogen werden.

Bei einer bevorzugten Ausführungsform der Erfindung wird die Korrekturgröße während der Steuerung des Gleitschalungsfertigers auf der Grundlage der Satellitensignale des globalen Navigationssatellitensystems ermittelt, um in dem Steuerungsmodus, in dem die Steuerung der Baumaschine nicht auf der Grundlage der Satellitensignale des globalen Navigationssatellitensystems erfolgt, für die Kompensation des Schlupfes zur Verfügung zu stehen. Die Ermittlung der Korrekturgröße erfolgt vorzugsweise kontinuierlich, so dass zum Zeitpunkt des Ausfalls der Satellitensignale die in dem unmittelbar vorausgehenden Streckenabschnitt ermittelte Korrekturgröße für den sich unmittelbar anschließenden Streckenabschnitt verwendet werden kann.

Eine besonders einfache zu implementierende Ausführungsform sieht die Ermittlung nur einer Korrekturgröße für den Lenkwinkel der Laufwerke vor. Hierfür wird davon ausgegangen, dass der Lenkwinkel der Laufwerke für die gesamte zu bearbeitende Strecke nur um einen konstanten Betrag korrigiert werden muss, d. h. während der Fahrt immer um den gleichen Winkel gegengelenkt werden muss. Dieser Winkel kann vorzugsweise während der Geradeausfahrt ermittelt werden.

Die Steuereinheit der Positionsbestimmungs-Einrichtung 13 ist derart konfiguriert, dass während der Steuerung der Baumaschine auf der Grundlage der Satellitensignale des globalen Navigationssatellitensystems, die nachfolgende Routine durchgeführt wird.

Für die Ermittlung der Korrekturgröße analysiert die Recheneinheit 16 den Verlauf der Trajektorie, d. h. stellt fest, ob die Baumaschine geradeaus fährt oder in einer Kurve fährt. Wenn sich die Baumaschine geradeaus bewegen soll, d. h. die der Steuerung momentan zugrunde liegende Trajektorie T eine Gerade ist, wird unter der Voraussetzung, dass ein Schlupf nicht vorliegt, für sämtliche Laufwerke die Einstellung eines Lenkwinkels von 0° angenommen. Für die Ermittlung der Korrekturgröße werden die Lenkwinkel erfasst, die für die Geradeausfahrt von der Steuerungseinrichtung 18 vorgegeben werden, so dass sich die Baumaschine entlang der Trajektorie T, d. h. der Geraden, bewegt. Diese Lenkwinkel werden als die Korrekturgröße angenommen, die in das kinematische Modell 16A eingeführt werden.

Bei dem vorliegenden Ausführungsbeispiel wird davon ausgegangen, dass sich der Lenkwinkel für sämtliche Laufwerke während der Geradeausfahrt zumindest nicht wesentlich ändert. Dann ergibt sich für jedes Laufwerk eine Korrekturgröße für den Lenkwinkel. Die Korrekturgröße kann aber auch aus unterschiedlichen während der Geradeausfahrt von der Steuereinrichtung eingestellten Lenkwinkeln mit den bekannten statistischen Auswertverfahren berechnet werden. Zur Ermittlung der Korrekturgröße kann die Recheneinheit 16 während der Geradausfahrt aus einer Mehrzahl von Lenkwinkeln beispielsweise den Mittelwert berechnen.

Die Bestimmung der Korrekturgröße kann auch während der Kurvenfahrt erfolgen. Wenn die Baumaschine eine Kurve fährt, wird mit dem bekannten Radius der Kurve der zugehörige Lenkwinkel berechnet, der für den Kurvenradius unter der Annahme, dass ein Schlupf nicht auftritt, einzustellen wäre. Die Korrekturgröße ist die Differenz zwischen dem von der Steuerungseinrichtung 18 während der Kurvenfahrt eingestellten Lenkwinkel und dem berechneten Lenkwinkel.

Eine weitere Ausführungsform sieht die Berechnung der Korrekturgröße in Abhängigkeit von dem Verlauf der Trajektorie T vor. Folglich werden in dem Steuerungsmodus, in dem die Steuerung der Baumaschine nicht auf der Grundlage der Satellitensignale des globalen Navigationssatellitensystems erfolgt, Korrekturgrößen für unterschiedliche Streckenverläufe, d. h. gerade Streckenabschnitte S1 und/oder gekrümmte Streckenabschnitte S2, berechnet und in dem Speicher 17 gespeichert. Die einzelnen Korrekturgrößen oder Korrekturfaktoren können bestimmten Wertebereichen für die entsprechenden Lenkwinkel zugeordnet werden, beispielsweise einem ersten Lenkwinkelbereich von 0° bis 20°, einem zweiten Lenkwinkelbereich von größer als 20° bis 40° und einem dritten Lenkwinkelbereich von größer als 40°. Die Korrekturgröße kann auch in Abhängigkeit von der Geschwindigkeit der Laufwerke 3, 4, 6 berechnet werden. Beispielsweise können jedem Lenkwinkelbereich unterschiedliche Geschwindigkeitsbereiche zugeordnet werden, beispielsweise einen ersten, zweiten und einen dritten Geschwindigkeitsbereich, oder umgekehrt, so dass sich für eine bestimmte Geschwindigkeit und einen bestimmten Lenkwinkel eine bestimmte Korrekturgröße ergibt.

Die ermittelten Korrekturgrößen werden in dem das kinematische Modell beschreibenden Gleichungssystem 4.4.1 berücksichtigt. Bei dem vorliegenden Ausführungsbeispiel werden die gemessenen Lenkwinkel für die beiden vorderen Laufwerke und das hintere Laufwerk mit der entsprechenden Korrekturgröße korrigiert. Diese Korrektur trägt der Annahme Rechnung, dass wegen des Schlupfes während der Geradeausfahrt oder Kurvenfahrt ein Gegenlenken um einen bestimmten Winkel erforderlich ist. Beispielsweise wird der von der Steuerungseinrichtung 18 für das vordere linke Laufwerk 3 während der Geradeausfahrt vorgegebene Lenkwinkel $\varphi$ von dem gemessenen Lenkwinkel abgezogen. Anstelle eines Korrekturwertes kann auch ein Korrekturfaktor berechnet werden, mit dem der Lenkwinkel multipliziert wird. Die Korrektur kann auch mit einer Korrekturfunktion erfolgen, die eine Korrekturgröße für unterschiedliche Lenkwinkel beschreibt, beispielsweise eine stärkere Korrektur bei größeren Lenkwinkeln. Die Korrekturfunktion kann auch unterschiedliche Geschwindigkeiten der Laufwerke berücksichtigen, beispielsweise eine stärkere Korrektur bei höheren Geschwindigkeiten. Mit der Korrektur der Lenkwinkel wird also auch der Schlupf bei der Berechnung der Position und Orientierung ($\psi$) der Baumaschine auf der Grundlage des in der Recheneinheit 16 der Positionsbestimmungs-Einrichtung 13 implementierten kinematischen Modells 16A berücksichtigt. Dadurch wird die Positionsbestimmung und somit auch die Steuerung der Baumaschine ohne den Empfang der Satellitensignale weiter verbessert.

Wenn Korrekturgrößen für unterschiedliche Lenkwinkel und/oder der Geschwindigkeiten berücksichtigt werden sollen, vergleicht die Recheneinheit den gemessenen Lenkwinkel bzw. die gemessene Geschwindigkeit eines Laufwerks mit den Wertebereichen für Lenkwinkel und Geschwindigkeiten und stellt fest, in welchem Wertebereich der Lenkwinkel bzw. die Geschwindigkeit liegt. Daraufhin wird die dem jeweiligen Lenkwinkelbereich bzw. Geschwindigkeitsbereich zugeordnete Korrekturgröße aus dem Speicher ausgelesen und für die weitere Berechnung von Position und Orientierung

($\psi$) herangezogen.

Die Korrekturgrößen für den Lenkwinkel können während des betreffenden Bauvorhabens vorzugsweise auf einer Geraden S1 oder auf einem gekrümmten Streckenabschnitt S2 ermittelt werden, auf der die Baumaschine gefahren ist, bevor die Satellitennavigation ausgefallen ist. Es ist aber auch möglich dem kinematischen Modell Korrekturgrößen zugrunde zu legen, die während anderer Bauvorhaben und/oder mit Versuchen auf Teststrecken ermittelt und in dem Speicher gespeichert worden sind.

Anstelle des Lenkwinkels oder vorzugsweise zusätzlich zu dem Lenkwinkel kann auch die Geschwindigkeit der einzelnen Laufwerke mit einer Korrekturgröße korrigiert werden, die während des betreffenden Bauvorhabens oder anderer Bauvorhaben zuvor ermittelt worden ist. Die Recheneinheit 16 der Positionsbestimmungs-Einrichtung 13 ist für die Bestimmung einer Korrekturgröße für die Geschwindigkeit der einzelnen Laufwerke derart konfiguriert, dass während der Steuerung der Baumaschine auf der Grundlage der Satellitensignale des globalen Navigationssatellitensystems, die nachfolgende Routine durchgeführt wird.

Für die Ermittlung der Korrekturgröße werden die Geschwindigkeiten des vorderen rechten und linken Laufwerks 3, 4 und des hinteren Laufwerks 6 mit den zugehörigen Geschwindigkeits-Sensoren 22, 23, 24 beispielsweise während der Geradeausfahrt der Baumaschine erfasst. Darüber hinaus werden die beispielsweise für die Geradeausfahrt von der Steuerungseinrichtung 18 für die einzelnen Laufwerke 3, 4, 6 vorgegebenen Geschwindigkeiten erfasst, die den von den Geschwindigkeits-Sensoren 22, 23, 24 gemessenen Geschwindigkeiten entsprechen sollten. Die Recheneinheit 16 berechnet die Differenz zwischen den vorgegebenen Geschwindigkeiten und den gemessenen Geschwindigkeiten. Diese Differenz wird als eine Korrekturgröße für das jeweilige Laufwerk herangezogen, die in dem das kinematische Modell beschreibenden Gleichungssystem 4.4.1 berücksichtigt wird.

## Patentansprüche

1. Selbstfahrende Baumaschine mit
   einem Maschinenrahmen (1), der von Laufwerken (3, 4, 6) getragen wird, von denen wenigstens einige Laufwerke antreibbare und/oder lenkbare Laufwerke (3, 4, 6) sind,
   einer Positionsbestimmungs-Einrichtung (13) zur Bestimmung der Position eines auf die Baumaschine bezogenen Referenzpunktes (R) und der Orientierung ($\psi$) der Baumaschine in einem von der Baumaschine unabhängigen Koordinatensystem (X, Y, Z), wobei die Positionsbestimmungs-Einrichtung (13) einen Navigationssatellitensystem-Empfänger (14) zum Empfangen von Satellitensignalen eines globalen Navigationssatellitensystems (15) und eine Recheneinheit (16) aufweist, die derart konfiguriert ist, dass auf der Grundlage der Satellitensignale des globalen Navigationssatellitensystems (15) die Position (P) des Referenzpunktes (R) und die Orientierung ($\psi$) der Baumaschine in einem von der Baumaschine unabhängigen Koordinatensystem (X, Y, Z) bestimmt werden, und
   einer mit der Positionsbestimmungs-Einrichtung (13) zusammenwirkenden Steuerungseinrichtung (18), die derart konfiguriert ist, dass die Lenkwinkel der lenkbaren Laufwerke (3, 4, 6) derart eingestellt werden, dass sich der Referenzpunkt (R) der Baumaschine entlang einer vorgegebenen Trajektorie (T) bewegt,
   wobei
   die Recheneinheit (16) der Positionsbestimmungs-Einrichtung (13) derart konfiguriert ist, dass in einem Steuerungsmodus, in dem die Steuerung der Baumaschine nicht auf der Grundlage der Satellitensignale des globalen Navigationssatellitensystems (15) erfolgt, während der Bewegung der Baumaschine die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage eines in der Recheneinheit (16) der Positionsbestimmungs-Einrichtung implementierten kinematischen Modells (16A) bestimmt wird, das die Position (P) des Referenzpunktes (R) in dem von der Baumaschine unabhängigen Koordinatensystem (X, Y, Z) und die Orientierung ($\psi$) der Baumaschine in Abhängigkeit von den Lenkwinkeln und den Geschwindigkeiten der Laufwerke (3, 4, 6) beschreibt
   **dadurch gekennzeichnet,**
   **dass** die Recheneinheit (16) der Positionsbestimmungs-Einrichtung (13) derart konfiguriert ist, dass in dem Steuerungsmodus, in dem die Steuerung der Baumaschine auf der Grundlage der Satellitensignale des globalen Navigationssatellitensystems (15) erfolgt, mindestens eine Korrekturgröße für das kinematische Modell (16A) auf der Grundlage mindestens eines in einem bestimmten Streckenabschnitt (S1, S2) von der Steuerungseinrichtung (18) für ein Laufwerk (3, 4, 6) vorgegebenen Lenkwinkels ermittelt wird, wobei die Recheneinheit (16) der Positionsbestimmungs-Einrichtung (13) derart konfiguriert ist, dass in dem Steuerungsmodus, in dem die Steuerung der Baumaschine nicht auf der Grundlage der Satellitensignale des globalen Navigationssatellitensystems (15) erfolgt, die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit (16) der Positionsbestimmungs-Einrichtung (13) implementierten kinematischen Modells (16A) unter Berücksichtigung der mindestens einen Korrekturgröße bestimmt wird.

2. Selbstfahrende Baumaschine nach Anspruch 1, **dadurch gekennzeichnet, dass** die Recheneinheit (16) der Positionsbestimmungs-Einrichtung (13) den lenkbaren Laufwerken (3, 4, 6) zugeordnete Lenkwinkel-Sensoren (19, 20, 21) zur Bestimmung der Lenkwinkel und den antreibbaren Laufwerken (3, 4, 6) zugeordnete Geschwindigkeits-Sensoren (22, 23, 24) zur Bestimmung der Geschwindigkeiten der Laufwerke (3, 4, 6) aufweist, wobei Datenübertragungsmittel (CAN) zur Übertragung der die Lenkwinkel und die Geschwindigkeiten beschreibenden Daten von den Lenkwinkel-Sensoren (19, 20, 21) und den Geschwindigkeits-Sensoren (22, 23, 24) zu der Recheneinheit (16) als Eingangsgrößen des kinematischen Modells (16A) vorgesehen sind.

3. Selbstfahrende Baumaschine nach Anspruch 1 oder 2, **dadurch gekennzeichnet, dass** die Positionsbestimmungs-Einrichtung (13) derart konfiguriert ist, dass die auf der Grundlage der Satellitensignale des globalen Navigationssatellitensystems (15) bestimmte Position (P) des Referenzpunktes (R) und die Orientierung ($\psi$) der Baumaschine in dem von der Baumaschine unabhängigen Koordinatensystem (X, Y, Z) in einen Speicher (17) eingelesen wird und die Position (P) des Referenzpunktes (R) und die Orientierung ($\psi$) der Baumaschine in dem Steuerungsmodus auf der Grundlage des kinematischen Modells (16A) zur Bestimmung der Position (P) des Referenzpunktes (R) und der Orientierung ($\psi$) der Baumaschine aus dem Speicher (17) ausgelesen wird.

4. Selbstfahrende Baumaschine nach einem der Ansprüche 1 bis 3, **dadurch gekennzeichnet, dass** die Recheneinheit (16) der Positionsbestimmungs-Einrichtung (13) derart konfiguriert ist, dass in dem Steuerungsmodus auf der Grundlage des kinematischen Modells (16A) die Position (P) des Referenzpunktes (R) und die Orientierung ($\psi$) der Baumaschine in vorgegebenen Zeitintervallen fortlaufend bestimmt wird.

5. Selbstfahrende Baumaschine nach einem der Ansprüche 1 bis 4, **dadurch gekennzeichnet, dass** die Recheneinheit (16) der Positionsbestimmungs-Einrichtung (13) derart konfiguriert ist, dass die Modellierung der Bewegung der Baumaschine auf der Grundlage eines Lagrange-Ansatzes erfolgt.

6. Selbstfahrende Baumaschine nach einem der Ansprüche 1 bis 5, **dadurch gekennzeichnet, dass** die Recheneinheit (16) der Positionsbestimmungs-Einrichtung (13) derart konfiguriert ist, dass das kinematische Modell (16A) empirisch ermittelte Korrekturwerte für die Lenkwinkel (19, 20, 21) und/oder ermittelte Korrekturwerte für die Geschwindigkeit (22, 23, 24) berücksichtigt.

7. Selbstfahrende Baumaschine nach einem der Ansprüche 1 bis 6, **dadurch gekennzeichnet, dass** die Steuerungseinrichtung (18) derart konfiguriert ist, dass die Lenkwinkel der lenkbaren Laufwerke (3, 4, 6) derart eingestellt werden, dass der Abstand (d) zwischen der von der Trajektorie (T) beschriebenen Soll-Position ($P_{soll}$) und der von der Positionsbestimmungs-Einrichtung (13) ermittelten Ist-Position (Pist) des Referenzpunktes (R) minimal ist.

8. Selbstfahrende Baumaschine nach einem der Ansprüche 1 bis 7, **dadurch gekennzeichnet, dass** die Baumaschine eine Straßenfräse ist, die eine mit Fräs- oder Schneidwerkzeugen bestückte Fräs-/Schneidwalze aufweist, oder die Baumaschine ein Gleitschalungsfertiger ist, der eine Vorrichtung zum Formen von fließfähigem Material aufweist, oder die Baumaschine ein Straßenfertiger ist, der eine Einbaubohle zum Formen von Material aufweist.

9. Selbstfahrende Baumaschine nach Anspruch 8, **dadurch gekennzeichnet, dass** der bestimmte Streckenabschnitt ein gerader Abschnitt (S1) ist, wobei die Korrekturgröße für ein Laufwerk (3, 4, 6) ein in dem geraden Abschnitt von der Steuerungseinrichtung (18) für das Laufwerk vorgegebener Lenkwinkel ist.

10. Selbstfahrende Baumaschine nach einem der Ansprüche 1 bis 9, **dadurch gekennzeichnet, dass** die Recheneinheit (16) der Positionsbestimmungs-Einrichtung (13) derart konfiguriert ist, dass in dem Steuerungsmodus, in dem die Steuerung der Baumaschine auf der Grundlage der Satellitensignale des globalen Navigationssatellitensystems (15) erfolgt, auf der Grundlage eines in einem bestimmten Streckenabschnitt (S1, S2) von der Steuerungseinrichtung (18) für ein Laufwerk vorgegebenen Lenkwinkels eine Mehrzahl von Korrekturgrößen für das kinematische Modell (16A) in Abhängigkeit von der Art der Arbeitseinrichtung der Baumaschine und/oder der Anordnung der Arbeitseinrichtung in Arbeitsrichtung auf der linken oder rechten Seite der Längsachse des Maschinenrahmens (1) Baumaschine und/oder dem Abstand der Arbeitseinrichtung zu der Längsachse des Maschinenrahmens (1) und/oder der Beschaffenheit des Untergrundes und/oder dem Verlauf des Streckenabschnitts (S1, S2) und/oder der Geschwindigkeit des Laufwerks (3, 4, 6) ermittelt werden, wobei die Recheneinheit (16) der Positionsbestimmungs-Einrichtung (13) derart konfiguriert ist, dass in dem Steuerungsmodus, in dem die Steuerung der Baumaschine nicht auf der Grundlage der Satellitensignale des globalen Navigationssatellitensystems (15) erfolgt, die Position ($x_n$, $y_n$, $z_n$) des

auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit (16) der Positionsbestimmungs-Einrichtung (13) implementierten kinematischen Modells (16A) unter Berücksichtigung mindestens einer der Mehrzahl von Korrekturgrößen bestimmt wird.

11. Selbstfahrende Baumaschine nach Anspruch 10, **dadurch gekennzeichnet, dass** die Baumaschine ein Gleitschalungsfertiger ist, der eine Vorrichtung zum Formen von fließfähigem Material (11) aufweist, wobei die Recheneinheit (16) der Positionsbestimmungs-Einrichtung (13) derart konfiguriert ist, dass in dem Steuerungsmodus, in dem die Steuerung der Baumaschine auf der Grundlage der Satellitensignale des globalen Navigationssatellitensystems (15) erfolgt, auf der Grundlage eines in einem bestimmten Streckenabschnitt (S1, S2) von der Steuerungseinrichtung (18) für ein Laufwerk vorgegebenen Lenkwinkels eine Mehrzahl von Korrekturgrößen für das kinematische Modell (16A) in Abhängigkeit von der Anordnung der Vorrichtung zum Formen von fließfähigem Material (11) auf der linken oder rechten Seite des Maschinenrahmens (1) und/oder dem Abstand der Vorrichtung zum Formen von fließfähigem Material (11) von der Längsachse des Maschinenrahmens (1) ermittelt werden.

12. Selbstfahrende Baumaschine nach einem der Ansprüche 1 bis 11, **dadurch gekennzeichnet, dass** die Recheneinheit (16) der Positionsbestimmungs-Einrichtung (13) derart konfiguriert ist, dass in dem Steuerungsmodus, in dem die Steuerung der Baumaschine auf der Grundlage der Satellitensignale des globalen Navigationssatellitensystems (15) erfolgt, mindestens eine Korrekturgröße für das kinematische Modell (16A) auf der Grundlage der Differenz zwischen einer von der Steuerungseinrichtung (18) für ein Laufwerk (3, 4, 6) vorgegebenen Geschwindigkeit und der gemessenen Geschwindigkeit des Laufwerks ermittelt wird, wobei die Recheneinheit (16) der Positionsbestimmungs-Einrichtung (13) derart konfiguriert ist, dass in dem Steuerungsmodus, in dem die Steuerung der Baumaschine nicht auf der Grundlage der Satellitensignale des globalen Navigationssatellitensystems (15) erfolgt, die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit (16) der Positionsbestimmungs-Einrichtung implementierten kinematischen Modells (16A) unter Berücksichtigung der mindestens einen Korrekturgröße für die Geschwindigkeit des mindestens einen Laufwerks (3, 4, 6) bestimmt wird.

13. Verfahren zum Steuern einer selbstfahrenden Baumaschine, die einen Maschinenrahmen (1) aufweist, der von Laufwerken (3, 4, 5, 6) getragen wird, von denen wenigstens einige Laufwerke antreibbare und/oder lenkbare Laufwerke (3, 4, 6) sind, bei dem Satellitensignale eines globalen Navigationssatellitensystems (15) empfangen werden und auf der Grundlage der Satellitensignale des globalen Navigationssatellitensystems (15) die Position eines Referenzpunktes (R) und die Orientierung ($\psi$) der Baumaschine in einem von der Baumaschine unabhängigen Koordinatensystem (X, Y, Z) bestimmt werden und die Lenkwinkel der lenkbaren Laufwerke (3, 4, 6) derart eingestellt werden, dass sich der Referenzpunkt (R) der Baumaschine entlang einer vorgegebenen Trajektorie (T) bewegt, wobei

in einem Steuerungsmodus, in dem die Steuerung der Baumaschine nicht auf der Grundlage der Satellitensignale des globalen Navigationssatellitensystems (15) erfolgt, während der Bewegung der Baumaschine die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage eines in einer Recheneinheit (16) implementierten kinematischen Modells (16A) bestimmt wird, das die Position (P) des Referenzpunktes (R) und die Orientierung ($\psi$) der Baumaschine in dem von der Baumaschine unabhängigen Koordinatensystem (X, Y, Z) in Abhängigkeit von den Lenkwinkeln und den Geschwindigkeiten der Laufwerke (3, 4, 6) beschreibt **dadurch gekennzeichnet, dass**

in dem Steuerungsmodus, in dem die Steuerung der Baumaschine auf der Grundlage der Satellitensignale des globalen Navigationssatellitensystems erfolgt, mindestens eine Korrekturgröße für das kinematische Modell auf der Grundlage mindestens eines in einem bestimmten Streckenabschnitt von der Steuerungseinrichtung für ein Laufwerk vorgegebenen Lenkwinkels ermittelt wird, wobei in dem Steuerungsmodus, in dem die Steuerung der Baumaschine nicht auf der Grundlage der Satellitensignale des globalen Navigationssatellitensystems erfolgt, die Position ($x_n$, $y_n$, $z_n$) des auf die Baumaschine bezogenen Referenzpunktes (R) und die Orientierung ($\psi$) der Baumaschine in dem von der Baumaschine unabhängigen Koordinatensystem (X, Y, Z) auf der Grundlage des in der Recheneinheit der Positionsbestimmungs-Einrichtung implementierten kinematischen Modells unter Berücksichtigung der mindestens einen Korrekturgröße bestimmt wird.

14. Verfahren nach Anspruch 13, **dadurch gekennzeichnet, dass** in dem Steuerungsmodus auf der Grundlage des kinematischen Modells (16A) die Position (P) des Referenzpunktes (R) und die Orientierung ($\psi$) der Baumaschine in vorgegebenen Zeitintervallen fortlaufend bestimmt wird.

**15.** Verfahren nach Anspruch 13 oder 14, **dadurch gekennzeichnet, dass** in dem Steuerungsmodus auf der Grundlage des kinematischen Modells (16A) die Modellierung der Bewegung der Baumaschine auf der Grundlage eines Lagrange-Ansatzes erfolgt.

**16.** Verfahren nach einem der Ansprüche 13 bis 15, **dadurch gekennzeichnet, dass** der Lenkwinkel der lenkbaren Laufwerke (3, 4, 6) mit Lenkwinkel-Sensoren (19, 20, 21) gemessen wird und das kinematische Modell (16A) empirisch ermittelte Korrekturwerte für die Lenkwinkel (19, 20, 21) berücksichtigt und/oder die Geschwindigkeit der antreibbaren Laufwerke (3, 4, 6) mit Geschwindigkeits-Sensoren (22, 23, 24) gemessen wird und das kinematische Modell (16A) empirisch ermittelte Korrekturwerte für die Geschwindigkeit (22, 23, 24) berücksichtigt.

**17.** Verfahren nach einem der Ansprüche 13 bis 16, **dadurch gekennzeichnet, dass** die Lenkwinkel der lenkbaren Laufwerke (3, 4, 6) derart eingestellt werden, dass der Abstand (d) zwischen der von der Trajektorie (T) beschriebenen Soll-Position ($P_{soll}$) und der ermittelten Ist-Position (Pist) des Referenzpunktes (R) minimal ist.

**Claims**

**1.** Self-propelled construction machine with
a machine frame (1) supported by running gears (3, 4, 6), at least some of which are drivable and/or steerable running gears (3, 4, 6),
a positioning device (13) for determining the position of a reference point (R) related to the construction machine and the orientation ($\psi$) of the construction machine in a coordinate system (X, Y, Z) not dependent on the construction machine, with the position-determining device (13) comprising a navigation satellite system receiver (14) for receiving satellite signals of a global navigation satellite system (15) and a computing unit (16) configured so that, based on the satellite signals of the global navigation satellite system (15), the position (P) of the reference point (R) and the orientation ($\psi$) of the construction machine are determined in a coordinate system (X, Y, Z) not dependent on the construction machine, and
a controller (18) cooperating with the position-determining device (13) configured to adjust the steering angles of the steerable running gears (3, 4, 6) so that the reference point (R) of the construction machine moves along a set trajectory (T),
the computing unit (16) of the position-determining device (13) being configured so that, in a control mode in which the control of the construction machine is not based on the satellite signals of the navigation satellite system (15), during the movement of the construction machine the position ($x_n$, $y_n$, $z_n$) of the reference point (R) relative to the construction machine and the orientation ($\psi$) of the construction machine are determined in the coordinate system (X, Y, Z) that is not dependent on the construction machine based on a kinematic model (16A) implemented in the computing unit (16) of the position-determining device, which describes the position (P) of the reference point (R) in the coordinate system (X, Y, Z) independent of the construction machine and the orientation ($\psi$) of the construction machine depending on the steering angles and the speeds of the running gears (3, 4, 6),
**characterised in that**
the computing unit (16) of the position-determining device (13) is configured so that, in the control mode in which the control of the construction machine is based on the satellite signals of the global navigation satellite system (15), at least one correction variable is determined for the kinematic model (16A) based on at least one steering angle set in a certain route section (S1, S2) for a running gear (3, 4, 6) by the controller (18), with the computing unit (16) of the position-determining device (13) being configured so that, in the control mode in which the control of the construction machine is not based on the satellite signals of the navigation satellite system (15), the position ($x_n$, $y_n$, $z_n$) of the reference point (R) relative to the construction machine and the orientation ($\psi$) of the construction machine in the coordinate system (X, Y, Z) that is not dependent on the construction machine are determined on the basis of the kinematic model (16A) implemented in the computing unit (16) of the position-determining device (13) taking into account the at least one correction variable.

**2.** Self-propelled construction machine according to claim 1, **characterised in that** the computing unit (16) of the position-determining device (13) comprises steering angle sensors (19, 20, 21) that are associated with the steerable running gears (3, 4, 6) for determining the steering angle and speed sensors (22, 23, 24) associated with the drivable running gears (3, 4, 6) for determining the speeds of the running gears (3, 4, 6), wherein data transmission means (CAN) for transmitting the data describing the steering angle and the speeds from the steering angle sensors (19, 20, 21) and the speed sensors (22, 23, 24) to the computing unit (16) as input variables of the kinematic model (16A) are provided.

3. Self-propelled construction machine according to either claim 1 or claim 2, **characterised in that** the position-determining device (13) is configured so that the position (P) of the reference point (R) and the orientation ($\psi$) of the construction machine in the coordinate system independent of the construction machine (X, Y, Z), which are determined on the basis of the satellite signals of the navigation satellite system (15), are stored in a memory (17), and so that the position (P) of the reference point (R) and the orientation ($\psi$) of the construction machine is retrieved from the memory (17) in the control mode on the basis of the kinematic model (16A) for determining the position (P) of the reference point (R) and the orientation ($\psi$) of the construction machine.

4. Self-propelled construction machine according to any of claims 1 to 3, **characterised in that** the computing unit (16) of the position-determining device (13) is configured so that, in the control mode, the position (P) of the reference point (R) and the orientation ($\psi$) of the construction machine is continuously determined at set time intervals on the basis of the kinematic model (16A).

5. Self-propelled construction machine according to any of claims 1 to 4, **characterised in that** the computing unit (16) of the position determining device (13) is configured to model the movement of the construction machine based on a Lagrange approach.

6. Self-propelled construction machine according to any of claims 1 to 5, **characterised in that** the computing unit (16) of the position-determining device (13) is configured so that the kinematic model (16A) takes into account empirically determined correction values for the steering angles (19, 20, 21) and/or empirically determined correction values for the speed (22, 23, 24).

7. Self-propelled construction machine according to any of claims 1 to 6,
**characterised in that** the controller (18) is configured so that the steering angles of the steerable running gears (3, 4, 6) are adjusted so that the distance (d) between the desired position Ptarget described by the trajectory (T) and the actual position ($P_{actual}$) of the reference point R determined by the position-determining device (13) is minimal.

8. Self-propelled construction machine according to any of claims 1 to 7, **characterised in that** the construction machine is a road milling machine having a milling drum/cutting roller equipped with milling/cutting tool, the construction machine is a slipform paver having a device for moulding flowable material, or the construction machine is a road finisher having a paving screed for moulding material.

9. Self-propelled construction machine according to claim 8, **characterised in that** the specific route section is a straight section (S1), wherein the correction variable for a running gear (3, 4, 6) is a steering angle set for the running gear by the controller (18) in the straight section.

10. Self-propelled construction machine according to any of claims 1 to 9, **characterised in that** the computing unit (16) of the position-determining device (13) is configured so that, in the control mode in which the control of the construction machine is based on the satellite signals of the global navigation satellite system (15), a plurality of correction variables is determined for the kinematic model (16A) on the basis of a steering angle set in a certain route section (S1, S2) for a running gear by the controller (18), depending on the type of work equipment of the construction machine, and/or the arrangement of the work equipment in the working direction on the left or right side of the longitudinal axis of the machine frame (1) of the construction machine and/or the distance of the work equipment to the longitudinal axis of the machine frame (1) and/or the condition of the ground and/or the course of the route section (S1, S2) and/or the speed of the running gear (3, 4, 6), with the control unit (16) of the position-determining device (13) being configured so that, in the control mode in which the control of the construction machine is not based on the satellite signals of the navigation satellite system (15), the position ($x_n$, $y_n$, $z_n$) of the reference point (R) relative to the construction machine and the orientation ($\psi$) of the construction machine in the coordinate system (X, Y, Z) that is not dependent on the construction machine are determined on the basis of the kinematic model (16A) implemented in the computing unit (16) of the position-determining device (13) taking into account at least one of the plurality of correction variables.

11. Self-propelled construction machine according to claim 10, **characterised in that** the construction machine is a slipform paver having a device for moulding flowable material (11), wherein the computing unit (16) of the position-determining device (13) is configured so that, in the control mode in which the control of the construction machine takes place based on the satellite signals of the navigation satellite system (15), a plurality of correction variables is determined by the controller (18) on the basis of a steering angle set for a running gear in a certain route section (S1, S2) for the kinematic model (16A) depending on the arrangement of the device for moulding flowable material (11) on the left or right side of the machine frame (1) and/or the distance of the device for moulding flowable material (11) from the longitudinal axis of the machine frame (1).

12. Self-propelled construction machine according to any of claims 1 to 11, **characterised in that** the computing unit (16) of the position-determining device (13) is configured so that, in the control mode in which the control of the construction machine is based on the satellite signals of the global navigation satellite system (15), at least one correction variable is determined for the kinematic model (16A) on the basis of the difference between a speed set by the controller (18) for a running gear (3, 4, 6) and the speed of the running gear that is measured, wherein the computing unit (16) of the position-determining device (13) is configured so that, in the control mode in which the control of the construction machine is not based on the satellite signals of the global navigation satellite system (15), the position $(x_n, y_n, z_n)$, of the reference point (R) relating to the construction machine and the orientation $(\psi)$ of the construction machine in the coordinate system (X, Y, Z) that is independent of the construction machine is determined on the basis of the kinematic model (16A) implemented in the computing unit (16) of the position-determining device in consideration of the at least one correction variable for the speed of the at least one running gear (3, 4, 6).

13. A method of controlling a self-propelled construction machine having a machine frame (1) supported by running gears (3, 4, 5, 6), at least some of which are drivable and/or steerable running gears (3, 4, 6), in which satellite signals of a global navigation satellite system (15) are received, and, based on the satellite signals of the global navigation satellite system (15), the position of a reference point (R) and the orientation $(\psi)$ of the construction machine are determined in a coordinate system independent of the construction machine (X, Y, Z) and the steering angle of the steerable running gears (3, 4, 6) are set so that the reference point (R) of the construction machine moves along a set trajectory (T),
in a control mode in which the control of the construction machine is not performed based on the satellite signals of the global navigation satellite system (15), during the movement of the construction machine, the position $(x_n, y_n, z_n)$ of the reference point (R) related to the construction machine and the orientation $(\psi)$ of the construction machine in the coordinate system (X, Y, Z) that is not dependent on the construction machine being determined on the basis of a kinematic model (16A) implemented in a computing unit (16) which describes the position (P) of the reference point (R) and the orientation $(\psi)$ of the construction machine in the coordinate system (X, Y, Z) that is independent of the construction machine on the basis of the steering angles and the speeds of the running gear (3, 4, 6),
**characterised in that**,
in the control mode in which the control of the construction machine is based on the satellite signals of the global navigation satellite system, at least one correction variable is determined for the kinematic model based on at least one steering angle set in a certain route section for a running gear by the controller, in the control mode in which the control of the construction machine is not based on the satellite signals of the navigation satellite system, the position $(x_n, y_n, z_n)$ of the construction machine relating to the reference point (R) and the orientation $(\psi)$ of the construction machine in the coordinate system (X, Y, Z) that is not dependent on the construction machine being determined on the basis of the kinematic model implemented in the computing unit of the position-determining device taking into account the at least one correction variable.

14. Method according to claim 13, **characterised in that** in the control mode, the position (P) of the reference point (R) and the orientation $(\psi)$ of the construction machine is continuously determined at set time intervals on the basis of the kinematic model (16A).

15. Method according to either claim 13 or claim 14, **characterised in that** in the control mode based on the kinematic model (16A), the movement of the construction machine is modelled based on a Lagrange approach.

16. Method according to any of claims 13 to 15, **characterised in that** the steering angle of the steerable running gears (3, 4, 6) is measured with steering angle sensors (19, 20, 21) and the kinematic model (16A) takes into account empirically obtained correction values for the steering angles (19, 20, 21) and/or the speed of the drivable running gears (3, 4, 6) is measured with speed sensors (22, 23, 24) and that the kinematic model (16A) takes into account empirically obtained correction values for the speed (22, 23, 24).

17. Method according to any of claims 13 to 16, **characterised in that** the steering angle of the steerable running gears (3, 4, 6) are adjusted so that the distance (d) between the desired position $(P_{target})$ described by the trajectory (T) and the actual position $(P_{actual})$ of the reference point R is minimal.

**Revendications**

1. Engin de chantier automoteur avec
   un bâti d'engin (1) qui est porté par des mécanismes de roulement (3, 4, 6), dont au moins certains mécanismes de roulement sont des mécanismes de roulement (3, 4, 6) entraînables et/ou dirigeables,
   un dispositif de détermination de position (13) pour la détermination de la position d'un point de référence (R) lié à l'engin de chantier et l'orientation ($\psi$) de l'engin de chantier dans un système de coordonnées (X, Y, Z) indépendant de l'engin de chantier, dans lequel le dispositif de détermination de position (13) présente un récepteur de système de navigation par satellite (14) pour la réception de signaux de satellite d'un système de navigation par satellite (15) global et une unité de calcul (16) qui est configurée de telle manière que sur la base des signaux de satellite du système de navigation par satellite (15) global la position (P) du point de référence (R) et l'orientation ($\psi$) de l'engin de chantier soient déterminées dans un système de coordonnées (X, Y, Z) indépendant de l'engin de chantier, et
   un dispositif de commande (18) coagissant avec le dispositif de détermination de position (13) qui est configuré de telle manière que les angles de direction des mécanismes de roulement (3, 4, 6) dirigeables soient réglés de telle manière que le point de référence (R) de l'engin de chantier se déplace le long d'une trajectoire (T) prédéfinie, dans lequel
   l'unité de calcul (16) du dispositif de détermination de position (13) est configurée de telle manière que dans un mode de commande, dans lequel la commande de l'engin de chantier n'est pas effectuée sur la base des signaux de satellite du système de navigation par satellite (15) global, pendant le mouvement de l'engin de chantier la position ($x_n$, $y_n$, $z_n$) du point de référence (R) lié à l'engin de chantier et l'orientation ($\psi$) de l'engin de chantier sont déterminées dans le système de coordonnées (X, Y, Z) indépendant de l'engin de chantier sur la base d'un modèle (16A) cinématique implémenté dans l'unité de calcul (16) du dispositif de détermination de position, qui décrit la position (P) du point de référence (R) dans le système de coordonnées (X, Y, Z) indépendant de l'engin de chantier et l'orientation ($\psi$) de l'engin de chantier en fonction des angles de direction et des vitesses des mécanismes de roulement (3, 4, 6),
   **caractérisé en ce**
   **que** l'unité de calcul (16) du dispositif de détermination de position (13) est configurée de telle manière que dans le mode de commande, dans lequel la commande de l'engin de chantier est effectuée sur la base des signaux de satellite du système de navigation par satellite (15) global, au moins une grandeur de correction pour le modèle cinématique (16A) est déterminée sur la base d'au moins un angle de direction prescrit dans une section de voie (S1, S2) déterminée par le dispositif de commande (18) pour un mécanisme de roulement (3, 4, 6), dans lequel l'unité de calcul (16) du dispositif de détermination de position (13) est configurée de telle manière que dans le mode de commande, dans lequel la commande de l'engin de chantier n'est pas effectuée sur la base des signaux de satellite du système de navigation par satellite (15) global, la position ($x_n$, $y_n$, $z_n$) du point de référence (R) lié à l'engin de chantier et l'orientation ($\psi$) de l'engin de chantier sont déterminées sur la base du modèle (16A) cinématique implémenté dans l'unité de calcul (16) du dispositif de détermination de position (13) en tenant compte de l'au moins une grandeur de correction.

2. Engin de chantier automoteur selon la revendication 1, **caractérisé en ce que** l'unité de calcul (16) du dispositif de détermination de position (13) présente des capteurs d'angle de direction (19, 20, 21) associés aux mécanismes de roulement (3, 4, 6) dirigeables pour une détermination des angles de direction et des capteurs de vitesse (22, 23, 24) associés aux mécanismes de roulement (3, 4, 6) entraînables pour une détermination des vitesses des mécanismes de roulement (3, 4, 6), dans lequel des moyens de transmission de données (CAN) sont prévus pour la transmission des données décrivant les angles de direction et les vitesses des capteurs d'angle de direction (19, 20, 21) et des capteurs de vitesse (22, 23, 24) à l'unité de calcul (16) comme grandeurs d'entrée du modèle cinématique (16A).

3. Engin de chantier automoteur selon la revendication 1 ou 2, **caractérisé en ce que** le dispositif de détermination de position (13) est configuré de telle manière que la position (P) du point de référence (R) déterminée sur la base des signaux de satellite du système de navigation par satellite (15) global et l'orientation ($\psi$) de l'engin de chantier est lue dans le système de coordonnées (X, Y, Z) indépendant de l'engin de chantier dans une mémoire (17) et la position (P) du point de référence (R) et l'orientation ($\psi$) de l'engin de chantier sont lues à partir de la mémoire (17) dans le mode de commande sur la base du modèle cinématique (16A) pour la détermination de la position (P) du point de référence (R) et de l'orientation ($\psi$) de l'engin de chantier.

4. Engin de chantier automoteur selon l'une quelconque des revendications 1 à 3, **caractérisé en ce que** l'unité de calcul (16) du dispositif de détermination de position (13) est configurée de telle manière que dans le mode de commande sur la base du modèle cinématique (16A) la position (P) du point de référence (R) et l'orientation ($\psi$) de

l'engin de chantier sont déterminées en continu dans des intervalles de temps prédéfinis.

5. Engin de chantier automoteur selon l'une quelconque des revendications 1 à 4, **caractérisé en ce que** l'unité de calcul (16) du dispositif de détermination de position (13) est configurée de telle manière que la modélisation du mouvement de l'engin de chantier soit effectuée sur la base d'une approche de Lagrange.

6. Engin de chantier automoteur selon l'une quelconque des revendications 1 à 5, **caractérisé en ce que** l'unité de calcul (16) du dispositif de détermination de position (13) est configurée de telle manière que le modèle cinématique (16A) tienne compte des valeurs de correction déterminées par voie empirique pour les angles de direction (19, 20, 21) et/ou des valeurs de correction déterminées pour la vitesse (22, 23, 24).

7. Engin de chantier automoteur selon l'une quelconque des revendications 1 à 6, **caractérisé en ce que** le dispositif de commande (18) est configuré de telle manière que les angles de direction des mécanismes de roulement (3, 4, 6) dirigeables soient réglés de telle manière que la distance (d) entre la position de consigne ($P_{de\ consigne}$) décrite par la trajectoire (T) et la position réelle ($P_{reelle}$) déterminée par le dispositif de détermination de position (13) du point de référence (R) soit minimale.

8. Engin de chantier automoteur selon l'une quelconque des revendications 1 à 7, **caractérisé en ce que** l'engin de chantier est une fraiseuse routière qui présente un rouleau de fraisage/de coupe équipé d'outils de fraisage ou de coupe, ou l'engin de chantier est un finisseur à coffrage glissant qui présente un dispositif pour le formage de matériau coulant, ou l'engin de chantier est un finisseur routier qui présente une poutre lisseuse pour le formage de matériau.

9. Engin de chantier automoteur selon la revendication 8, **caractérisé en ce que** la section de voie déterminée est une section droite (S1), dans lequel la grandeur de correction pour un mécanisme de roulement (3, 4, 6) est un angle de direction prédéfini dans la section droite du dispositif de commande (18) pour le mécanisme de roulement.

10. Engin de chantier automoteur selon l'une quelconque des revendications 1 à 9, **caractérisé en ce que** l'unité de calcul (16) du dispositif de détermination de position (13) est configurée de telle manière que dans le mode de commande, dans lequel la commande de l'engin de chantier est effectuée sur la base des signaux de satellite du système de navigation par satellite (15) global, sur la base d'un angle de direction prédéfini dans une section de voie (S1, S2) déterminée du dispositif de commande (18) pour un mécanisme de roulement une pluralité de grandeurs de correction pour le modèle cinématique (16A) sont déterminées en fonction du type de dispositif de travail de l'engin de chantier et/ou de l'agencement du dispositif de travail dans le sens de travail sur le côté gauche ou droit de l'axe longitudinal du bâti d'engin (1) et/ou de la distance du dispositif de travail à l'axe longitudinal du bâti d'engin (1) et/ou de la nature du sol et/ou de l'étendue de la section de voie (S1, S2) et/ou de la vitesse du mécanisme de roulement (3, 4, 5), dans lequel l'unité de calcul (16) du dispositif de détermination de position (13) est configurée de telle manière que dans le mode de commande, dans lequel la commande de l'engin de chantier n'est pas effectuée sur la base des signaux de satellite du système de navigation par satellite (15) global, la position ($x_n$, $y_n$, $z_n$) du point de référence (R) lié à l'engin de chantier et l'orientation ($\psi$) de l'engin de chantier sont déterminées dans le système de coordonnées (X, Y, Z) indépendant de l'engin de chantier sur la base du modèle cinématique (16A) implémenté dans l'unité de calcul (16) du dispositif de détermination de position (13) en tenant compte d'au moins une de la pluralité de grandeurs de correction.

11. Engin de chantier automoteur selon la revendication 10, **caractérisé en ce que** l'engin de chantier est un finisseur à coffrage glissant qui présente un dispositif de formage de matériau coulant (11), dans lequel l'unité de calcul (16) du dispositif de détermination de position (13) est configurée de telle manière que dans le mode de commande, dans lequel la commande de l'engin de chantier est effectuée sur la base des signaux de satellite du système de navigation par satellite (15) global, sur la base d'un angle de direction prédéfini dans une section de voie (S1, S2) déterminée par le dispositif de commande (18) pour un mécanisme de roulement une pluralité de grandeurs de correction pour le modèle cinématique (16A) est déterminée en fonction de l'agencement du dispositif de formage de matériau coulant (11) sur le côté gauche ou droit du bâti d'engin (1) et/ou de la distance du dispositif de formage de matériau coulant (11) par rapport à l'axe longitudinal du bâti d'engin (1).

12. Engin de chantier automoteur selon l'une quelconque des revendications 1 à 11, **caractérisé en ce que** l'unité de calcul (16) du dispositif de détermination de position (13) est configurée de telle manière que dans le mode de commande, dans lequel la commande de l'engin de chantier est effectuée sur la base des signaux de satellite du système de navigation par satellite (15) global, au moins une grandeur de correction pour le modèle cinématique (16A) est déterminée sur la base de la différence entre une vitesse prédéfinie par le dispositif de commande (18) pour un mécanisme de roulement (3, 4, 6) et la vitesse mesurée du mécanisme de roulement, dans lequel l'unité de calcul (16) du dispositif de détermination de position (13) est configurée de telle manière que dans le mode de commande, dans lequel la commande de l'engin de chantier n'est pas effectuée sur la base des signaux de satellite du système de navigation par satellite (15) global, la position $(x_n, y_n, z_n)$ du point de référence (R) lié à l'engin de chantier et l'orientation ($\psi$) de l'engin de chantier sont déterminées dans le système de coordonnées (X, Y, Z) indépendant de l'engin de chantier sur la base du modèle cinématique (16A) implémenté dans l'unité de calcul (16) du dispositif de détermination de position en tenant compte d'au moins une grandeur de correction pour la vitesse de l'au moins un mécanisme de roulement (3, 4, 6).

13. Procédé de commande d'un engin de chantier automoteur qui présente un bâti d'engin (1) qui est porté par des mécanismes de roulement (3, 4, 5, 6) dont au moins certains mécanismes de roulement sont des mécanismes de roulement (3, 4, 6) entraînables et/ou dirigeables, pour lequel des signaux de satellite d'un système de navigation par satellite (15) global sont reçus et sur la base des signaux de satellite du système de navigation par satellite (15) global la position d'un point de référence (R) et l'orientation ($\psi$) de l'engin de chantier sont déterminées dans un système de coordonnées (X, Y, Z) indépendant de l'engin de chantier et les angles de direction des mécanismes de roulement (3, 4, 6) dirigeables sont réglés de telle manière que le point de référence (R) de l'engin de chantier se déplace le long d'une trajectoire prédéfinie (T),
dans lequel
dans un mode de commande, dans lequel la commande de l'engin de chantier n'est pas effectuée sur la base des signaux de satellite du système de navigation par satellite (15) global, pendant le mouvement de l'engin de chantier la position $(x_n, y_n, z_n)$ du point de référence (R) lié à l'engin de chantier et l'orientation ($\psi$) de l'engin de chantier dans le système de coordonnées (X, Y, Z) indépendant de l'engin de chantier sont déterminées sur la base d'un modèle cinématique (16A) implémenté dans une unité de calcul (16), qui décrit la position (P) du point de référence (R) et l'orientation ($\psi$) de l'engin de chantier dans le système de coordonnées (X, Y, Z) indépendant de l'engin de chantier en fonction des angles de direction et des vitesses des mécanismes de roulement (3, 4, 6),
**caractérisé en ce que**
dans le mode de commande, dans lequel la commande de l'engin de chantier est effectuée sur la base des signaux de satellite du système de navigation par satellite global, au moins une grandeur de correction pour le modèle cinématique est déterminée sur la base d'au moins un angle de direction prédéfini dans une section de voie déterminée par le dispositif de commande pour un mécanisme de roulement, dans lequel dans le mode de commande, dans lequel la commande de l'engin de chantier n'est pas effectuée sur la base des signaux de satellite du système de navigation par satellite global, la position $(x_n, y_n, z_n)$ du point de référence (R) lié à l'engin de chantier et l'orientation ($\psi$) de l'engin de chantier dans le système de coordonnées (X, Y, Z) indépendant de l'engin de chantier sont déterminées sur la base du modèle cinématique implémenté dans l'unité de calcul du dispositif de détermination de position en tenant compte de l'au moins une grandeur de correction.

14. Procédé selon la revendication 13, **caractérisé en ce que** dans le mode de commande sur la base du modèle cinématique (16A) la position (P) du point de référence (R) et l'orientation ($\psi$) de l'engin de chantier sont déterminées en continu dans des intervalles de temps prédéfinis.

15. Procédé selon la revendication 13 ou 14, **caractérisé en ce que** la modélisation du mouvement de l'engin de chantier est effectuée sur la base d'une approche de Lagrange dans le mode de commande sur la base du modèle cinématique (16A).

16. Procédé selon l'une quelconque des revendications 13 à 15, **caractérisé en ce que** l'angle de direction des mécanismes de roulement (3, 4, 6) dirigeables est mesuré avec des capteurs d'angle de direction (19, 20, 21) et le modèle cinématique (16A) tient compte des valeurs de correction déterminées par voie empirique pour les angles de direction (19, 20, 21) et/ou la vitesse des mécanismes de roulement (3, 4, 6) entraînables est mesurée avec des capteurs de vitesse (22, 23, 24) et le modèle cinématique (16A) tient compte des valeurs de correction déterminées par voie empirique pour la vitesse (22, 23, 24),

17. Procédé selon l'une quelconque des revendications 13 à 16, **caractérisé en ce que** les angles de direction des mécanismes de roulement (3, 4, 6) dirigeables sont réglés de telle manière que la distance (d) entre la position de consigne ($P_{de\ consigne}$) décrite par la trajectoire (T) et la position réelle ($P_{réelle}$) déterminée du point de référence (R) soit minimale.

Fig. 1A

Fig. 1B

Fig. 2A

Fig. 2B

Fig. 3

Fig. 4

Fig. 5

Fig. 6

Fig. 7

$$\eta_{FR} = \frac{\pi}{2} - (\psi + \delta_{FR})$$

$$\vec{V}_{X\_FR} = \left|\vec{V}_{FR}\right| \cdot \sin \eta_{FR}$$

$$\vec{V}_{Y\_FR} = \left|\vec{V}_{FR}\right| \cdot \cos \eta_{FR}$$

Fig. 8

$$\mu_{FR} = -(\alpha + \beta)$$

Fig. 9

S2$_L$

1

11

S1

1

11

**Fig. 10A**

**Fig. 10B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130041549 A1

- EP 1103659 B1